# EUROPEAN PATENT SPECIFICATION

(11) **EP 3 618 345 B1**
(45) Date of publication and mention of the grant of the patent: **30.12.2020**
(21) Application number: 17912583.6
(22) Date of filing: 09.06.2017
(51) Int. Cl.: H04L 9/08

(54) **RE-ENCRYPTED KEY GENERATION DEVICE, RE-ENCRYPTION DEVICE, RE-ENCRYPTED CIPHER TEXT DECRYPTION DEVICE AND CRYPTOSYSTEM**
ERZEUGUNGSVORRICHTUNG FÜR WIEDERVERSCHLÜSSELTEN SCHLÜSSEL, WIEDERVERSCHLÜSSELUNGSVORRICHTUNG, ENTSCHLÜSSELUNGSVORRICHTUNG FÜR WIEDERVERSCHLÜSSELTEN CHIFFRIERTEXT UND KRYPTOSYSTEM
DISPOSITIF DE GÉNÉRATION DE CLÉ RE-CHIFFRÉE, DISPOSITIF DE RE-CHIFFREMENT, DISPOSITIF DE DÉCHIFFREMENT DE TEXTE CHIFFRÉ RE-CHIFFRÉ, ET CRYPTOSYSTÈME

(43) Date of publication of application: 04.03.2020
(73) Proprietor: Mitsubishi Electric Corporation, Chiyoda-ku Tokyo 100-8310 (JP)
(72) Inventor: KOSEKI, Yoshihiro, Tokyo 100-8310 (JP); KAWAI, Yutaka, Tokyo 100-8310 (JP)
(74) Representative: Pfenning, Meinig & Partner mbB
(86) International application number: PCT/JP2017/021477
(87) International publication number: WO 2018/225248

(56) References cited:
- WO-A1-2014/112048
- WO-A1-2015/107620
- JP-A- 2016 076 759
- US-A1- 2016 234 012
- KAITAI LIANG ET AL: "A ciphertext-policy attribute-based proxy re-encryption scheme for data sharing in public clouds", CONCURRENCY AND COMPUTATION: PRACTICE AND EXPERIENCE, vol. 27, no. 8, 13 October 2014 (2014-10-13), pages 2004-2027, XP55660217, GB ISSN: 1532-0626, DOI: 10.1002/cpe.3397
- SHUCHENG YU ET AL: "Attribute based data sharing with attribute revocation", INFORMATION, COMPUTER AND COMMUNICATIONS SECURITY, ACM, 2 PENN PLAZA, SUITE 701 NEW YORK NY 10121-0701 USA, 13 April 2010 (2010-04-13), pages 261-270, XP058270729, DOI: 10.1145/1755688.1755720 ISBN: 978-1-60558-936-7
- KAWAI, Y. et al.: "Fully-Anonymous Functional Proxy-Re-Encryption", Cryptography ePrint Archive, 11 October 2013 (2013-10-11), XP061008268, Retrieved from the Internet: URL:http://ia.cr/2013/318 [retrieved on 2017-08-24]

## Description

### Technical Field

The present invention relates to proxy-re-encryption.

### Background Art

An attribute-based proxy-re-encryption scheme is a scheme in which decryption authority for a ciphertext can be changed without decrypting the ciphertext. In an attribute-based encryption scheme, a key attribute x is set in a decryption key, and a ciphertext attribute y is set in a ciphertext. In the attribute-based encryption scheme, the ciphertext can be decrypted only when the key attribute x and the ciphertext attribute y satisfy a relation R(x, y) = 1. In the attribute-based proxy-re-encryption scheme, by using a re-encryption key, a ciphertext attribute y that is set in a ciphertext can be changed to a different ciphertext attribute y' without decrypting the ciphertext.

Patent Literature 1 and Non-Patent Literature 1 provide descriptions related to attribute-based proxy-re-encryption schemes.

### Citation List

### Patent Literature

Patent Literature 1: WO 2014/112048 A1

### Non-Patent Literature

Non-Patent Literature 1: Yutaka Kawai and Katsuyuki Takashima, Fully-Anonymous Functional Proxy-Re-Encryption. Cryptology ePrint Archive: Report 2013/318 US Patent Application Publication US 2016/234012 discloses a functional proxy re-encryption scheme wherein attribute information is set in the encryption key, the decryption key, a re-encryption key, and in the ciphertext.

K. Liang et al: "A ciphertext-policy attribute-based proxy re-encryption scheme for data sharing in public clouds" discloses an attribute-based proxy re-encryption scheme with compact ciphertexts particularly suited for data sharing in the cloud.

S. Yu et al: "Attribute based data sharing with attribute revocation" discloses another attribute- based encryption scheme.

Patent Application Publications JP 2016/076759 and WO 2015/107620 also disclose relevant prior art.

### Summary of Invention

### Technical Problem

In the attribute-based proxy-re-encryption schemes described in Patent Literature 1 and Non-Patent Literature 1, a random matrix is included in a re-encrypted ciphertext, so that the size of the re-encrypted ciphertext increases.

It is an object of the present invention to make it possible to realize an attribute-based proxy-re-encryption scheme in which an increase in the size of a ciphertext entailed in re-encryption is reduced.

### Solution to Problem

A re-encryption key generation device according to the present invention includes:
a randomization unit to set a random number in a decryption key tdkₓ in which a key attribute x is set and set a random number in a tag tg_{ϕ} used to decrypt a ciphertext with the decryption key tdkₓ, so as to generate a decryption key tdkₓ^ and a tag tg_{ϕ}^;
an encryption key generation unit to encrypt the decryption key tdkₓ^ generated by the randomization unit by an attribute-based encryption scheme using a ciphertext attribute y', so as to generate an encryption key act_{y'}; and
a re-encryption key output unit to output a re-encryption key rk_{x,y'} including the encryption key act_{y'} generated by the encryption key generation unit and the tag tg_{ϕ}^ generated by the randomization unit.

### Advantageous Effects of Invention

In the present invention, a decryption key of tag-added attribute-based encryption is encrypted using attribute-based encryption to generate a re-encryption key. This eliminates the need to include a random matrix in a re-encrypted ciphertext, so that an increase in the size of a ciphertext entailed in re-encryption can be reduced.

### Brief Description of Drawings

Fig. 1 is a configuration diagram of a cryptographic system 1 according to a first embodiment;
Fig. 2 is a configuration diagram of a key generation device 10 according to the first embodiment;
Fig. 3 is a configuration diagram of an encryption device 20 according to the first embodiment;
Fig. 4 is a configuration diagram of an original ciphertext decryption device 30 according to the first embodiment;
Fig. 5 is a configuration diagram of a re-encryption key generation device 40 according to the first embodiment;
Fig. 6 is a configuration diagram of a re-encryption device 50 according to the first embodiment;
Fig. 7 is a configuration diagram of a re-encrypted ciphertext decryption device 60 according to the first embodiment;
Fig. 8 is a flowchart of a Setup algorithm according to the first embodiment;
Fig. 9 is a flowchart of a KG algorithm according to the first embodiment;
Fig. 10 is a flowchart of an Enc algorithm according to the first embodiment;
Fig. 11 is a flowchart of an ODec algorithm according to the first embodiment;
Fig. 12 is a flowchart of an RKG algorithm according to the first embodiment;
Fig. 13 is a flowchart of an REnc algorithm according to the first embodiment;
Fig. 14 is a flowchart of an RDec algorithm according to the first embodiment;
Fig. 15 is a configuration diagram of a key generation device 10 according to a first variation;
Fig. 16 is a configuration diagram of an encryption device 20 according to the first variation;
Fig. 17 is a configuration diagram of an original ciphertext decryption device 30 according to the first variation;
Fig. 18 is a configuration diagram of a re-encryption key generation device 40 according to the first variation;
Fig. 19 is a configuration diagram of a re-encryption device 50 according to the first variation; and
Fig. 20 is a configuration diagram of a re-encrypted ciphertext decryption device 60 according to the first variation.

### Description of Embodiments

### First Embodiment

### *** Description of Notations ***

Notations in the following description will be described.

When A is a random variable or distribution, Formula 101 denotes that y is randomly selected from A according to the distribution of A. That is, y is a random number in Formula 101. [Formula 101] $y {←}^{R} A$

When A is a set, Formula 102 denotes that y is uniformly selected from A. That is, y is a uniform random number in Formula 102. [Formula 102] $y {←}^{U} A$

Formula 103 denotes that y is a set defined by z, or y is a set substituted by z. [Formula 103] $y : = z$

When a is a constant, Formula 104 denotes that a machine (algorithm) A outputs a on input x. [Formula 104] $\begin{matrix}A \left(x\right) \to a \\ for example , \\ A \left(x\right) \to 1\end{matrix}$

Formula 105, that is F_{q}, denotes a finite field of order q.

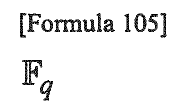

A vector representation denotes a vector representation in the finite field F_{q}. That is, it is as indicated in Formula 106.

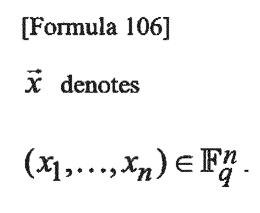

Formula 107 denotes the inner-product, indicated in Formula 109, of two vectors x^{→} and v^{→} indicated in Formula 108. [Formula 107] $\vec{x} ⋅ \vec{v}$ [Formula 108] $\begin{matrix}\vec{x} = \left({x}_{1},…,{x}_{n}\right) , \\ \vec{v} = \left({v}_{1},…,{v}_{n}\right)\end{matrix}$ [Formula 109] ${\sum }_{i = 1}^{n} {x}_{i} {v}_{i}$

Note that X^{T} denotes the transpose of a matrix X.

For a basis B and a basis B^{*} indicated in Formula 110, Formula 111 is established.

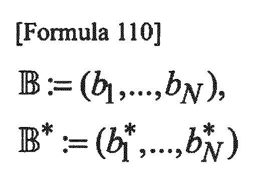

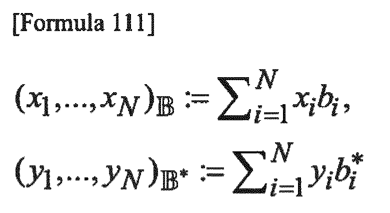

Note that e^{→}ⱼ denotes a normal basis vector indicated in Formula 112.

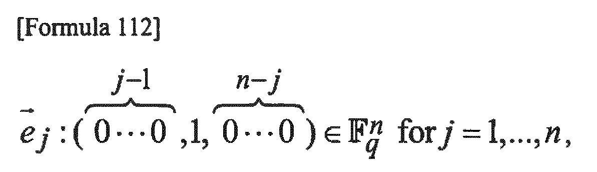

### *** Description of Spaces ***

Spaces used in the following description will be described.

Symmetric bilinear pairing groups will be described.

Symmetric bilinear pairing groups (q, G, G_{T}, g, e) are a tuple of a prime q, a cyclic additive group G of order q, a cyclic multiplicative group G_{T} of order q, g ≠ 0 ∈ G, and a polynomial-time computable nondegenerate bilinear pairing e : G x G → G_{T}. The nondegenerate bilinear pairing signifies e(sg, tg) = e(g, g)^{st}, and e(g, g) ≠ 1.

In the following description, let G_{bpg} be an algorithm that takes as input 1^{λ}, and outputs values of a parameter param_{G} := (q, G, G_{T}, g, e) of bilinear pairing groups with a security parameter λ.

Dual pairing vector spaces will be described.

Dual pairing vector spaces (q, V, G_{T}, A, e) can be constructed by a direct product of the symmetric bilinear pairing groups (param_{G}:=(q, G, G_{T}, g, e)). The dual pairing vector spaces (q, V, G_{T}, A, e) are a tuple of a prime q, an N-dimensional vector space V over F_{q} indicated in Formula 113, a cyclic group G_{T} of order q, and a canonical basis A := (a₁, ..., a_{N}) of the space V, and have the following operations (1) and (2), where aᵢ is as indicated in Formula 114. 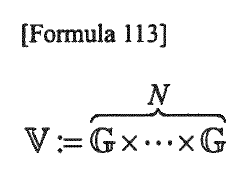 [Formula 114] ${a}_{i} : = \left({{0 , … , 0}^{︷}}^{i - 1}, g, {{0 , … , 0}^{︷}}^{N - i}\right)$

### Operation (1): Nondegenerate bilinear pairing

A pairing on the space V is defined by Formula 115. 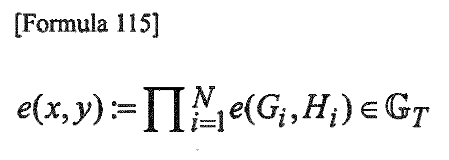 where

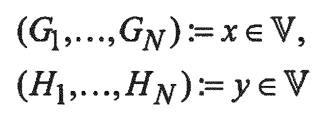

This is nondegenerate bilinear, that is, e(sx, ty) = e(x, y)^{st} and if e(x, y) = 1 for all y ∈ V, then x = 0. For all i and j, e(aᵢ, aⱼ) = e(g, g)^{δi,j}, where δ_{i,j} = 1 if i = j, and δ_{i,j} = 0 if i ≠ j, and e(g, g) ≠ 1 ∈ G_{T}.

### Operation (2): Distortion maps

Linear transformations ϕ_{i,j} on the space V indicated in Formula 116 can achieve Formula 117. [Formula 116] $\begin{matrix}if {ϕ}_{i , j} \left({a}_{j}\right) = {a}_{i} and \\ k \neq j , then {ϕ}_{i , j} \left({a}_{k}\right) = 0 .\end{matrix}$ [Formula 117] $\begin{matrix}{ϕ}_{i , j} \left(x\right) : = \left({{0 , … , 0}^{︷}}^{i - 1}, {g}_{j}, {{0 , … , 0}^{︷}}^{N - i}\right) \\ where \\ \left({g}_{1},…{g}_{N}\right) : = x .\end{matrix}$

The linear transformations ϕ_{i,j} will be called distortion maps.

In the following description, let G_{dpvs} be an algorithm that takes as input 1^{λ} and the number of dimensions Nₜ of the space V, and outputs values of a parameter param_{V} := (q, V, G_{T}, A, e) of dual pairing vector spaces with a security parameter λ.

### *** Description of Configurations ***

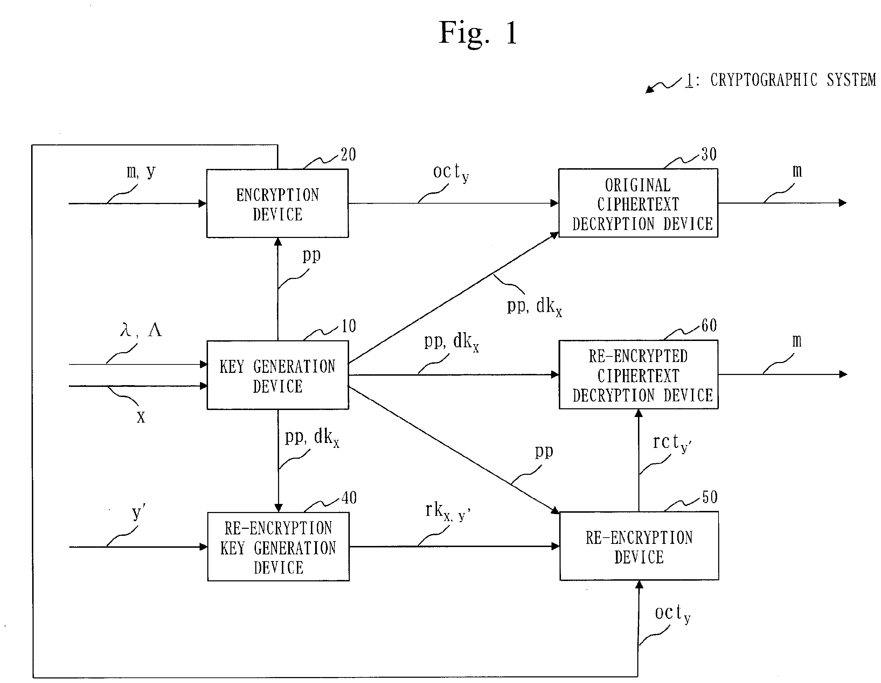

A configuration of a cryptographic system 1 according to a first embodiment will be described with reference to Fig. 1.

The cryptographic system 1 includes a key generation device 10, an encryption device 20, an original ciphertext decryption device 30, a re-encryption key generation device 40, a re-encryption device 50, and a re-encrypted ciphertext decryption device 60.

The key generation device 10, the encryption device 20, the original ciphertext decryption device 30, the re-encryption key generation device 40, the re-encryption device 50, and the re-encrypted ciphertext decryption device 60 are connected via transmission lines.

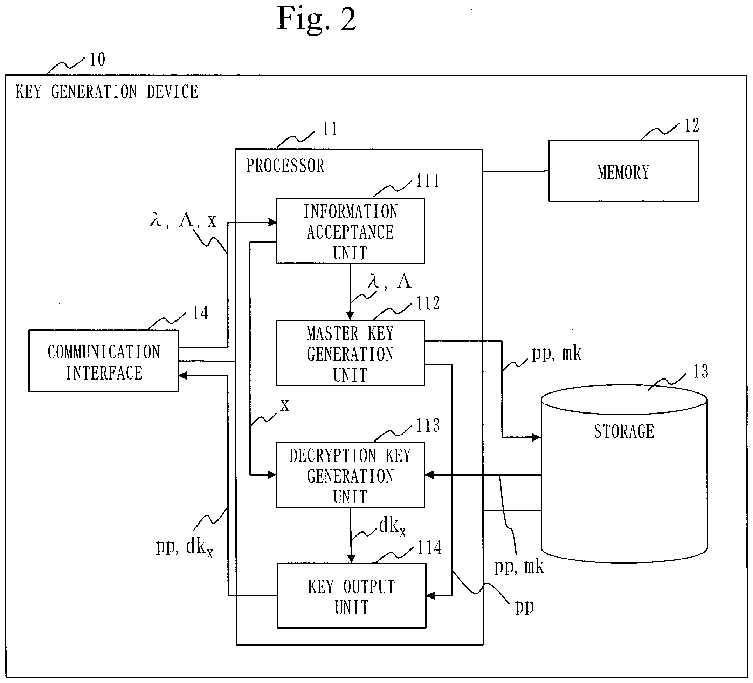

A configuration of the key generation device 10 according to the first embodiment will be described with reference to Fig. 2.

The key generation device 10 is a computer.

The key generation device 10 includes hardware of a processor 11, a memory 12, a storage 13, and a communication interface 14. The processor 11 is connected with other hardware components via signal lines and controls these other hardware components.

The key generation device 10 includes, as functional components, an information acceptance unit 111, a master key generation unit 112, a decryption key generation unit 113, and a key output unit 114. The functions of the functional components of the key generation device 10 are realized by software.

The storage 13 stores programs for realizing the functions of the functional components of the key generation device 10. These programs are loaded into the memory 12 by the processor 11 and executed by the processor 11. This realizes the functions of the functional components of the key generation device 10.

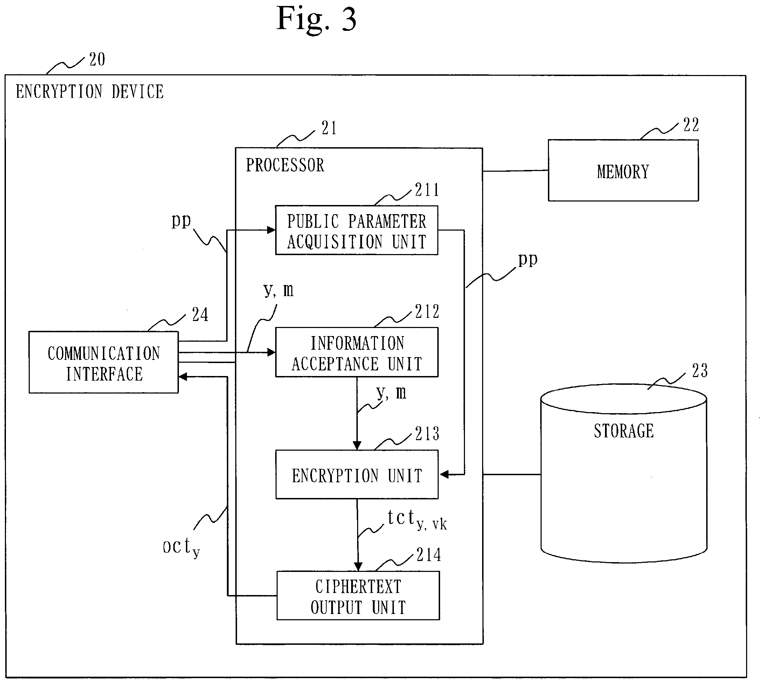

A configuration of the encryption device 20 according to the first embodiment will be described with reference to Fig. 3.

The encryption device 20 is a computer.

The encryption device 20 includes hardware of a processor 21, a memory 22, a storage 23, and a communication interface 24. The processor 21 is connected with other hardware components via signal lines and controls these other hardware components.

The encryption device 20 includes, as functional components, a public parameter acquisition unit 211, an information acceptance unit 212, an encryption unit 213, and a ciphertext output unit 214. The functions of the functional components of the encryption device 20 are realized by software.

The storage 23 stores programs for realizing the functions of the functional components of the encryption device 20. These programs are loaded into the memory 22 by the processor 21 and executed by the processor 21. This realizes the functions of the functional components of the encryption device 20.

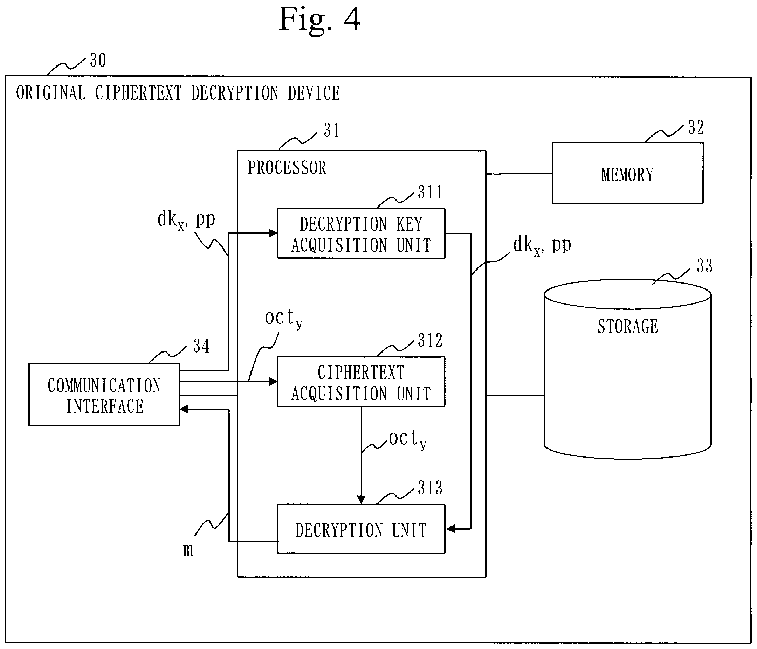

A configuration of the original ciphertext decryption device 30 according to the first embodiment will be described with reference to Fig. 4.

The original ciphertext decryption device 30 is a computer.

The original ciphertext decryption device 30 includes hardware of a processor 31, a memory 32, a storage 33, and a communication interface 34. The processor 31 is connected with other hardware components via signal lines and controls these other hardware components.

The original ciphertext decryption device 30 includes, as functional components, a decryption key acquisition unit 311, a ciphertext acquisition unit 312, and a decryption unit 313. The functions of the functional components of the original ciphertext decryption device 30 are realized by software.

The storage 33 stores programs for realizing the functions of the functional components of the original ciphertext decryption device 30. These programs are loaded into the memory 32 by the processor 31 and executed by the processor 31. This realizes the functions of the functional components of the original ciphertext decryption device 30.

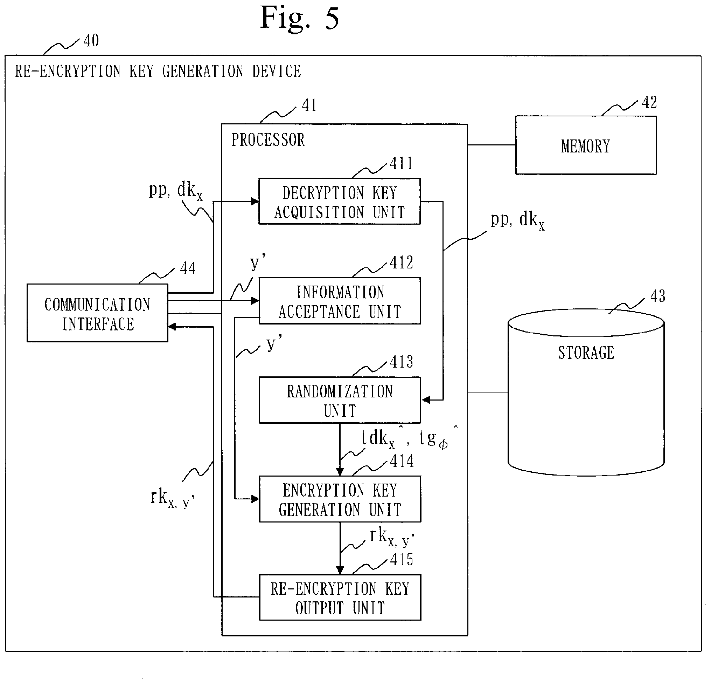

A configuration of the re-encryption key generation device 40 according to the first embodiment will be described with reference to Fig. 5.

The re-encryption key generation device 40 is a computer.

The re-encryption key generation device 40 includes hardware of a processor 41, a memory 42, a storage 43, and a communication interface 44. The processor 41 is connected with other hardware components via signal lines and controls these other hardware components.

The re-encryption key generation device 40 includes, as functional components, a decryption key acquisition unit 411, an information acceptance unit 412, a randomization unit 413, an encryption key generation unit 414, and a re-encryption key output unit 415. The functions of the functional components of the re-encryption key generation device 40 are realized by software.

The storage 43 stores programs for realizing the functions of the functional components of the re-encryption key generation device 40. These programs are loaded into the memory 42 by the processor 41 and executed by the processor 41. This realizes the functions of the functional components of the re-encryption key generation device 40.

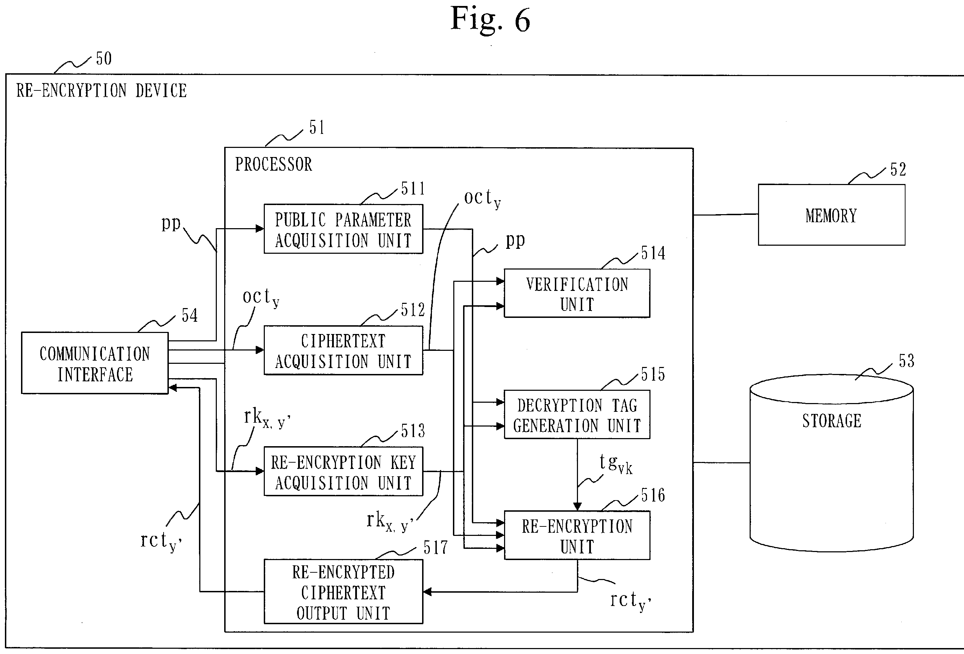

A configuration of the re-encryption device 50 according to the first embodiment will be described with reference to Fig. 6.

The re-encryption device 50 is a computer.

The re-encryption device 50 includes hardware of a processor 51, a memory 52, a storage 53, and a communication interface 54. The processor 51 is connected with other hardware components via signal lines and controls these other hardware components.

The re-encryption device 50 includes, as functional components, a public parameter acquisition unit 511, a ciphertext acquisition unit 512, a re-encryption key acquisition unit 513, a verification unit 514, a decryption tag generation unit 515, a re-encryption unit 516, and a re-encrypted ciphertext output unit 517. The functions of the functional components of the re-encryption device 50 are realized by software.

The storage 53 stores programs for realizing the functions of the functional components of the re-encryption device 50. These programs are loaded into the memory 52 by the processor 51 and executed by the processor 51. This realizes the functions of the functional components of the re-encryption device 50.

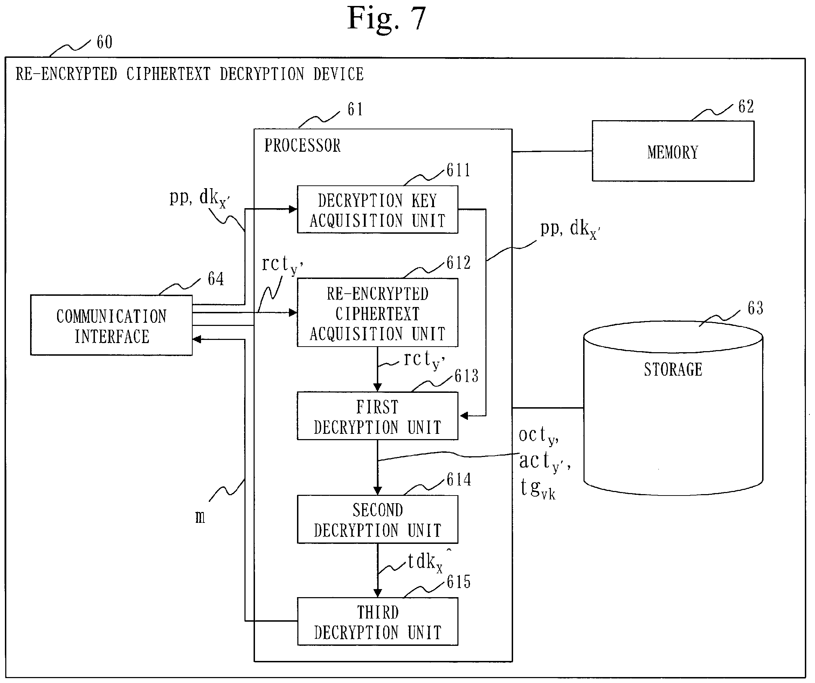

A configuration of the re-encrypted ciphertext decryption device 60 according to the first embodiment will be described with reference to Fig. 7.

The re-encrypted ciphertext decryption device 60 is a computer.

The re-encrypted ciphertext decryption device 60 includes hardware of a processor 61, a memory 62, a storage 63, and a communication interface 64. The processor 61 is connected with other hardware components via signal lines and controls these other hardware components.

The re-encrypted ciphertext decryption device 60 includes, as functional components, a decryption key acquisition unit 611, a re-encrypted ciphertext acquisition unit 612, a first decryption unit 613, a second decryption unit 614, and a third decryption unit 615. The functions of the functional components of the re-encrypted ciphertext decryption device 60 are realized by software.

The storage 63 stores programs for realizing the functions of the functional components of the re-encrypted ciphertext decryption device 60. These programs are loaded into the memory 62 by the processor 61 and executed by the processor 61. This realizes the functions of the functional components of the re-encrypted ciphertext decryption device 60.

It has been described above that each of the encryption device 20, the original ciphertext decryption device 30, the re-encryption key generation device 40, the re-encryption device 50, and the re-encrypted ciphertext decryption device 60 is a separate device.

However, the cryptographic system 1 may include a device that has the functions of two or more of the encryption device 20, the original ciphertext decryption device 30, the re-encryption key generation device 40, the re-encryption device 50, and the re-encrypted ciphertext decryption device 60. For example, the cryptographic system 1 may include a plurality of devices, each having the functions of the encryption device 20, the original ciphertext decryption device 30, the re-encryption key generation device 40, and the re-encrypted ciphertext decryption device 60.

### *** Description of Operation ***

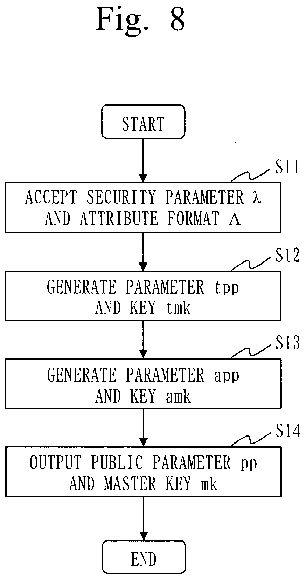

Operation of the cryptographic system 1 according to the first embodiment will be described with reference to Figs. 8 to 14.

The operation of the cryptographic system 1 according to the first embodiment corresponds to a cryptographic method according to the first embodiment. The operation of the cryptographic system 1 according to the first embodiment also corresponds to processes of a cryptographic program.

The cryptographic system 1 according to the first embodiment realizes an attribute-based proxy-re-encryption scheme. The attribute-based proxy-re-encryption scheme realized by the cryptographic system 1 according to the first embodiment includes seven algorithms: Setup, KG, Enc, ODec, RKG, REnc, and RDec.

The Setup algorithm according to the first embodiment will be described with reference to Fig. 8.

The Setup algorithm is executed by the key generation device 10. The Setup algorithm is a probabilistic algorithm that takes as input a security parameter λ and an attribute format A, and outputs a public parameter pp and a master key mk.

### (Step S11: Information acceptance process)

The information acceptance unit 111 accepts input of a security parameter λ and an attribute format A. Specifically, the information acceptance unit 111 accepts the security parameter λ and the attribute format A that are input through operation of an input device by an administrator of the key generation device 10.

### (Step S12: Tag-added master key generation process)

The master key generation unit 112 executes a TSetup algorithm indicated in Formula 118, taking as input the security parameter λ and the attribute format A that are accepted in step S11, so as to generate a parameter tpp and a key tmk.

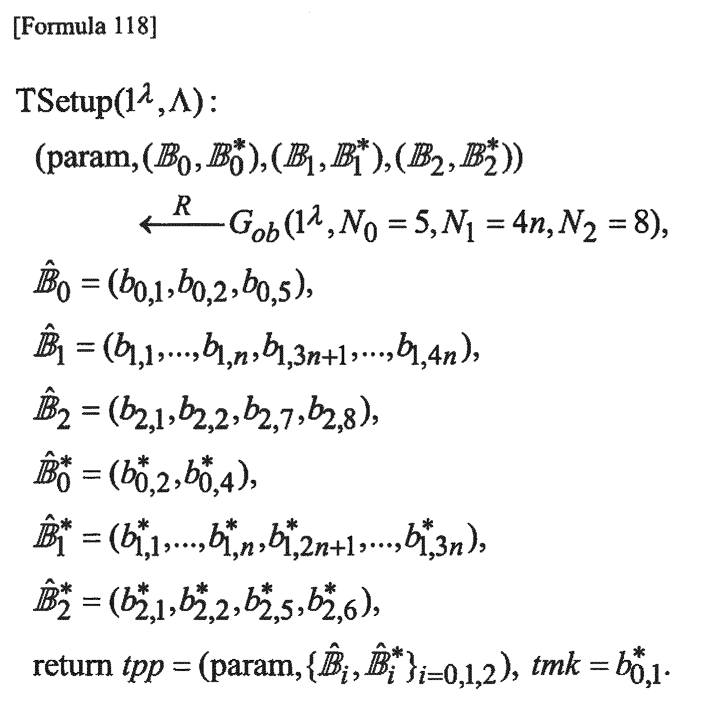

Note that an algorithm G_{ob} is as indicated in Formula 119.

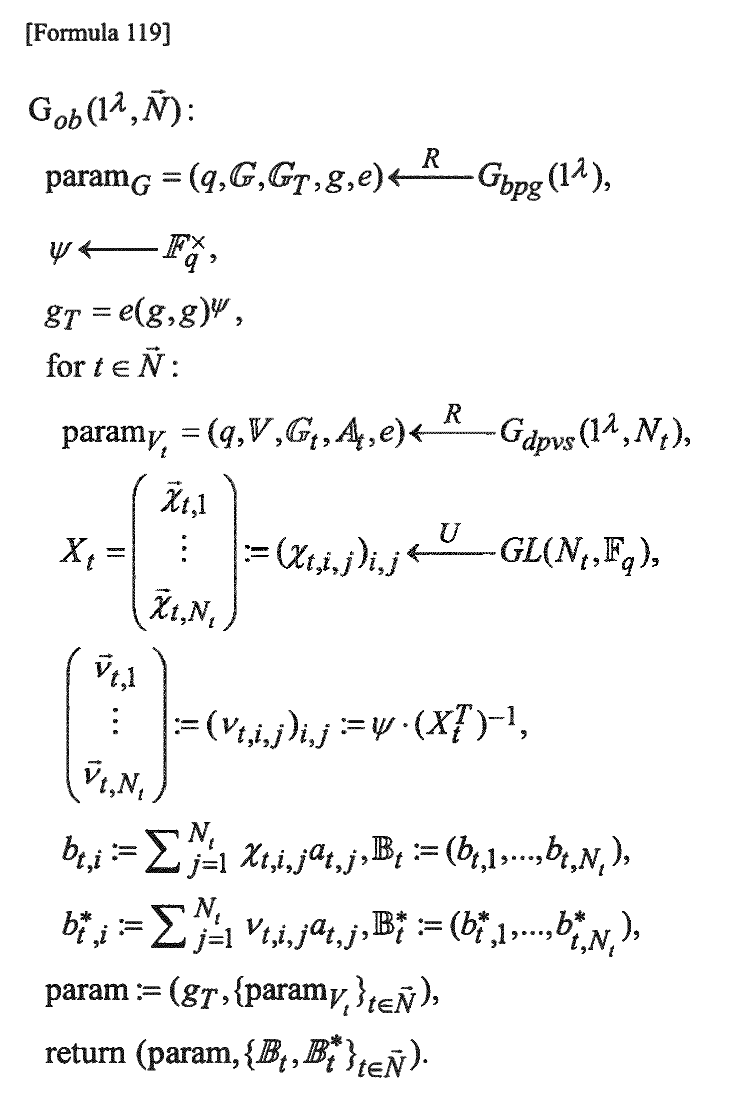

### (Step S13: Tagless master key generation process)

The master key generation unit 112 executes an ASetup algorithm indicated in Formula 120, taking as input the security parameter λ and the attribute format A that are accepted in step S11, so as to generate a parameter app and a key amk.

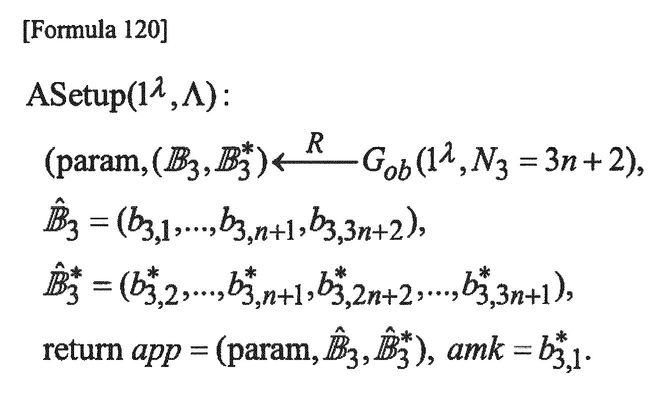

### (Step S14: Master key output process)

The key output unit 114 makes public, as a public parameter pp, the security parameter λ input in step S11, the parameter tpp generated in step S12, and the parameter app generated in step S13 by, for example, transmitting them to other devices via the communication interface 14. The key output unit 114 writes the public parameter pp in the storage 13. The key output unit 114 writes, as a master key mk, the key tmk generated in step S12 and the key amk generated in step S13 in the storage 13.

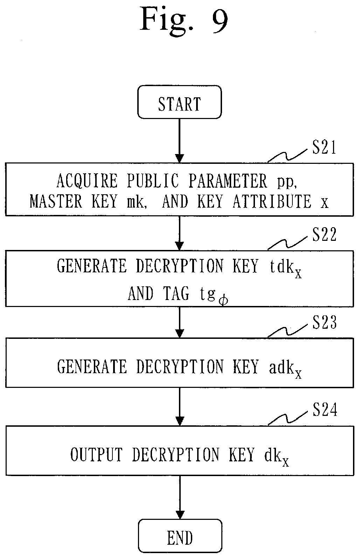

The KG algorithm according to the first embodiment will be described with reference to Fig. 9.

The KG algorithm is executed by the key generation device 10. The KG algorithm is a probabilistic algorithm that takes as input the public parameter pp, the master key mk, and a key attribute x, and outputs a decryption key dkₓ.

### (Step S21: Information acceptance process)

The information acceptance unit 111 reads the public parameter pp and the master key mk from the storage 13.

The information acceptance unit 111 accepts input of a key attribute x. Specifically, the information acceptance unit 111 accepts the key attribute x that is input through operation of the input device by the administrator of the key generation device 10.

The key attribute x is an attribute of a user who uses a decryption key dkₓ to be described later. As a specific example, the key attribute x is information such as a department to which the user who uses the decryption key dkₓ belongs and a position in a company or the like of the user. The key attribute x is assumed here to be an attribute of a user of the original ciphertext decryption device 30. The key attribute x is assumed to be an n-dimensional vector.

### (Step S22: Tag-added decryption key generation process)

The decryption key generation unit 113 executes a TKG algorithm indicated in Formula 121, taking as input the parameter tpp, the key tmk, and the key attribute x, so as to generate a tag-added decryption key including a decryption key tdkₓ and a tag tg_{ϕ}. The tag tg_{ϕ} is information used to decrypt a ciphertext with the decryption key tdkₓ.

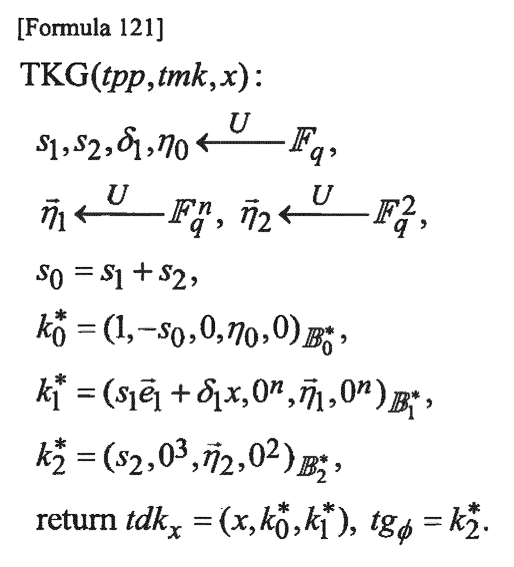

### (Step S23: Tagless decryption key generation process)

The decryption key generation unit 113 executes an AKG algorithm indicated in Formula 122, taking as input the parameter app, the key amk, and the key attribute x, so as to generate a decryption key adkₓ.

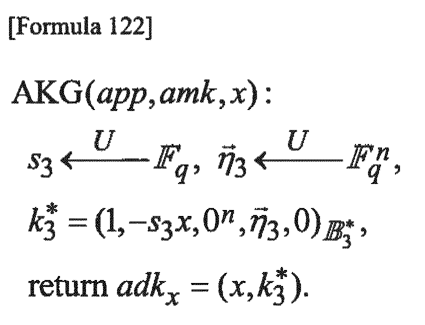

### (Step S24: Decryption key output process)

The key output unit 114 outputs, as the decryption key dkₓ, the key attribute x, the tag-added decryption key including the decryption key tdkₓ and the tag tg_{ϕ} generated in step S22, and the decryption key adkₓ generated in step S23 to the original ciphertext decryption device 30 and the re-encryption key generation device 40 in secrecy via the communication interface 14.

To output in secrecy means to transmit after encryption by an existing encryption scheme so as to be concealed from others.

The key generation device 10 generates a decryption key dk_{x'} based on a key attribute x' which is an attribute of a user of the re-encrypted ciphertext decryption device 60. The key attribute x' is assumed here to be an n-dimensional vector.

Specifically, in step S21, the information acceptance unit 111 accepts input of the key attribute x'. In step S22, the decryption key generation unit 113 generates a tag-added decryption key including a decryption key tdk_{x'} and a tag tg_{ϕ'}, taking as input the parameter tpp, the key tmk, and the key attribute x'. In step S23, the decryption key generation unit 113 generates a decryption key adk_{x'}, taking as input the parameter app, the key amk, and the key attribute x'. In step S24, the decryption key generation unit 113 outputs, as the decryption key dk_{x'}, the key attribute x', the tag-added decryption key including the decryption key tdk_{x'} and the tag tg_{ϕ'}, and the decryption key adk_{x'} to the re-encrypted ciphertext decryption device 60 in secrecy.

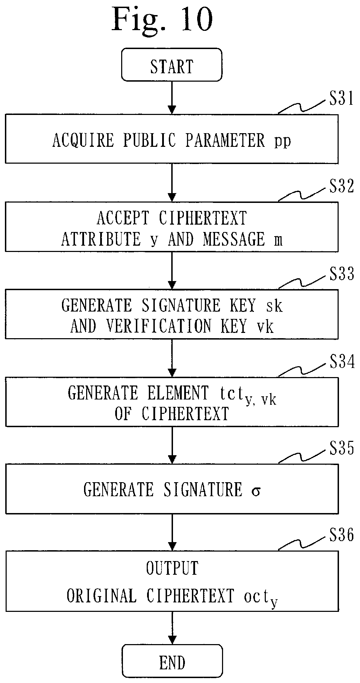

The Enc algorithm according to the first embodiment will be described with reference to Fig. 10.

The Enc algorithm is executed by the encryption device 20. The Enc algorithm is a probabilistic algorithm that takes as input the public parameter pp, a ciphertext attribute y, and a message m, and outputs an original ciphertext oct_{y}.

### (Step S31: Public parameter acquisition process)

The public parameter acquisition unit 211 acquires, via the communication interface 24, the public parameter pp that is made public by the key generation device 10.

### (Step S32: Information acceptance process)

The information acceptance unit 212 accepts input of a ciphertext attribute y and a message m. Specifically, the information acceptance unit 212 accepts the ciphertext attribute y and the message m that are input through operation of an input device by a user of the encryption device 20.

The ciphertext attribute y indicates an attribute that is allowed to decrypt the original ciphertext oct_{y}. The ciphertext attribute y is assumed here to correspond to the key attribute x. That is, it is assumed that the original ciphertext oct_{y} generated based on the ciphertext attribute y can be decrypted with the decryption key dkₓ in which the key attribute x is set. The ciphertext attribute y is assumed here to be an n-dimensional vector.

The message m is data to be transmitted to a destination.

### (Step S33: Signature key generation process)

The encryption unit 213 executes a key generation algorithm for one-time signatures, taking as input the security parameter λ, so as to generate a signature key sk and a verification key vk for a one-time signature. As the key generation algorithm for one-time signatures, an existing algorithm may be employed.

### (Step S34: Ciphertext element generation process)

The encryption unit 213 executes a TEnc algorithm indicated in Formula 123, taking as input the parameter tpp, the ciphertext attribute y, the verification key vk, and the message m, so as to generate an element tct_{y,vk}.

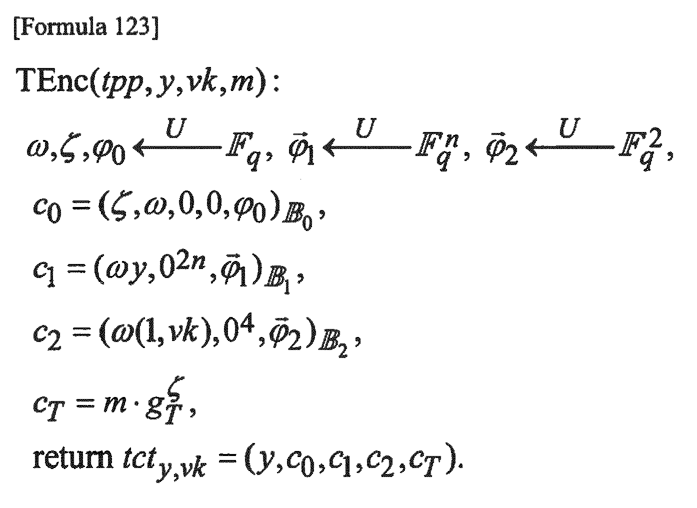

That is, the encryption unit 213 encrypts the message m by tag-added attribute-based encryption, so as to generate the element tct_{y,vk}. At this time, the encryption unit 213 sets the verification key vk in a portion of the element tct_{y,vk}.

### (Step S35: Signature generation process)

The encryption unit 213 executes a signature algorithm for one-time signatures, taking as input the signature key sk, the ciphertext attribute y, and the element tct_{y,vk}, so as to generate a signature σ. As the signature algorithm for one-time signatures, an existing algorithm may be employed.

### (Step S36: Ciphertext output process)

The ciphertext output unit 214 outputs, as an original ciphertext oct_{y}, the ciphertext attribute y, the verification key vk generated in step S33, the element tct_{y,vk} generated in step S34, and the signature σ generated in step S35 to the original ciphertext decryption device 30.

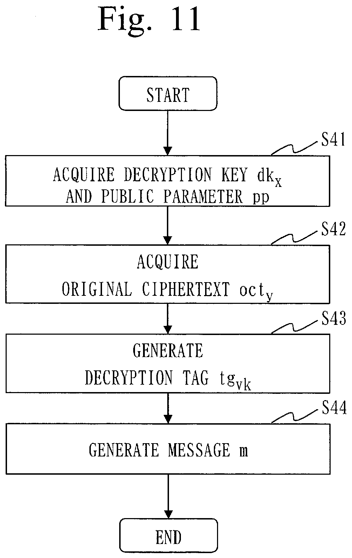

The ODec algorithm according to the first embodiment will be described with reference to Fig. 11.

The ODec algorithm is executed by the original ciphertext decryption device 30. The ODec algorithm is an algorithm that takes as input the public parameter pp, the decryption key dkₓ, and the original ciphertext oct_{y}, and outputs the message m.

### (Step S41: Decryption key acquisition process)

The decryption key acquisition unit 311 acquires, via the communication interface 34, the decryption key dkₓ and the public parameter pp that are generated by the key generation device 10.

### (Step S42: Ciphertext acquisition process)

The ciphertext acquisition unit 312 acquires, via the communication interface 34, the original ciphertext oct_{y} generated by the encryption device 20.

### (Step S43: Decryption tag generation process)

The decryption unit 313 transforms the tag tg_{ϕ} included in the decryption key dkₓ to generate a decryption tag tgᵥₖ.

Specifically, the decryption unit 313 executes a TTag algorithm indicated in Formula 124, taking as input the parameter tpp, the tag tg_{ϕ} included in the decryption key dkₓ, and the verification key vk included in the original ciphertext oct_{y}, so as to generate the decryption tag tgᵥₖ.

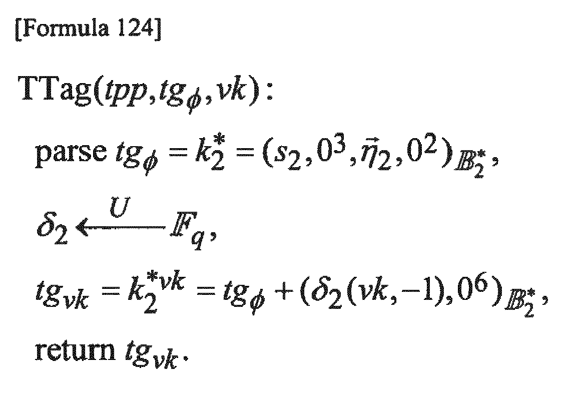

### (Step S44: Decryption process)

The decryption unit 313 decrypts the original ciphertext oct_{y} to obtain the message m.

Specifically, the decryption unit 313 executes a TDec algorithm indicated in Formula 125, taking as input the parameter tpp, the decryption key tdkₓ included in the decryption key dkₓ, the tag tgᵥₖ, and the element tct_{y,vk} included in the original ciphertext oct_{y}, so as to generate the message m.

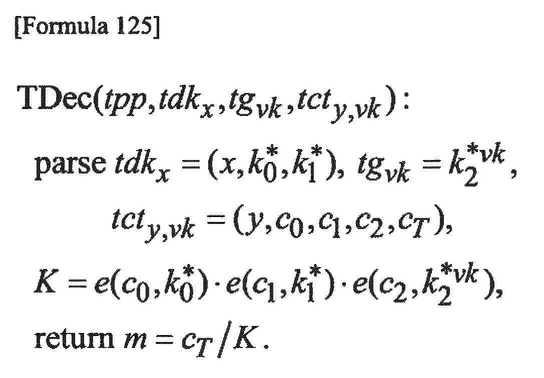

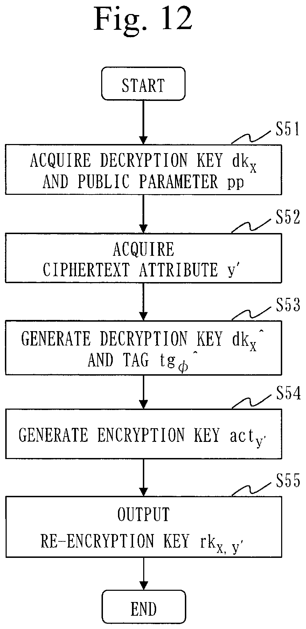

The RKG algorithm according to the first embodiment will be described with reference to Fig. 12.

The RKG algorithm is executed by the re-encryption key generation device 40. The RKG algorithm is a probabilistic algorithm that takes as input the public parameter pp, the decryption key dkₓ, and the ciphertext attribute y', and outputs a re-encryption key rk_{x,y'}.

### (Step S51: Decryption key acquisition process)

The decryption key acquisition unit 411 acquires, via the communication interface 44, the decryption key dkₓ and the public parameter pp that are generated by the key generation device 10.

### (Step S52: Information acceptance process)

The information acceptance unit 412 accepts input of a ciphertext attribute y'. Specifically, the information acceptance unit 412 accepts the ciphertext attribute y' that is input through operation of the input device by the user of the re-encryption key generation device 40.

The ciphertext attribute y' indicates an attribute that is allowed to decrypt a re-encrypted ciphertext rct_{y'}. The ciphertext attribute y' is assumed here to correspond to the key attribute x'. That is, it is assumed that the re-encrypted ciphertext rct_{y'} generated based on the ciphertext attribute y' can be decrypted with the decryption key dk_{x'} in which the key attribute x' is set. The ciphertext attribute y' is assumed here to be an n-dimensional vector.

### (Step S53: Randomization process)

The randomization unit 413 sets a random number individually in each of the decryption key tdkₓ and the tag tg_{ϕ} that are included in the decryption key dkₓ, so as to generate a decryption key tdkₓ^ and a tag tg_{ϕ}^.

Specifically, the randomization unit 413 executes a TRand algorithm indicated in Formula 126, taking as input the parameter tpp, the decryption key tdkₓ, and the tag tg_{ϕ}, so as to generate the decryption key tdkₓ^ and the tag tg_{ϕ}^.

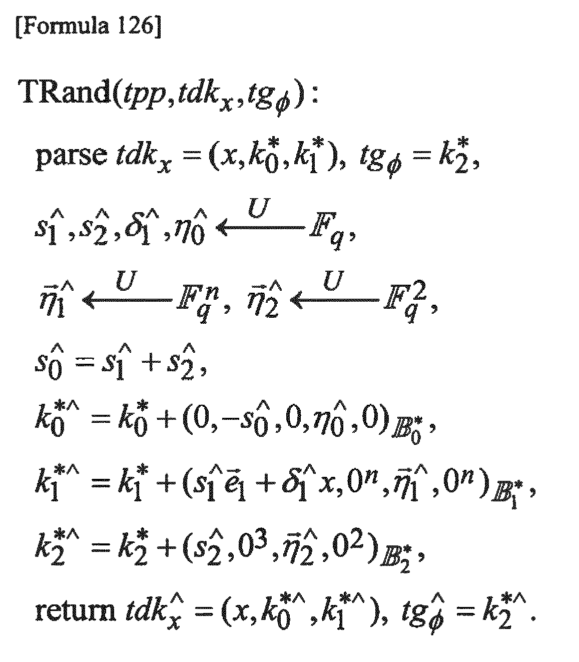

### (Step S54: Encryption key generation process)

The encryption key generation unit 414 encrypts the decryption key tdkₓ^ by an attribute-based encryption scheme using the ciphertext attribute y', so as to generate an encryption key act_{y'}.

Specifically, the encryption key generation unit 414 executes an AEnc algorithm indicated in Formula 127, taking as input the parameter app, the ciphertext attribute y', and the decryption key tdkₓ^, so as to generate the encryption key act_{y'}.

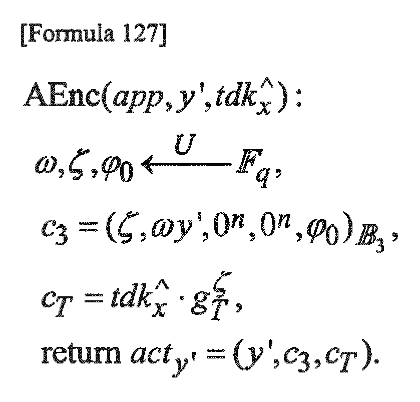

### (Step S55: Re-encryption key output process)

The re-encryption key output unit 415 outputs, as a re-encryption key rk_{x,y'}, the key attribute x, the ciphertext attribute y', the tag tg_{ϕ}^ generated in step S53, and the encryption key act_{y'} generated in step S54 to the re-encryption device 50 in secrecy.

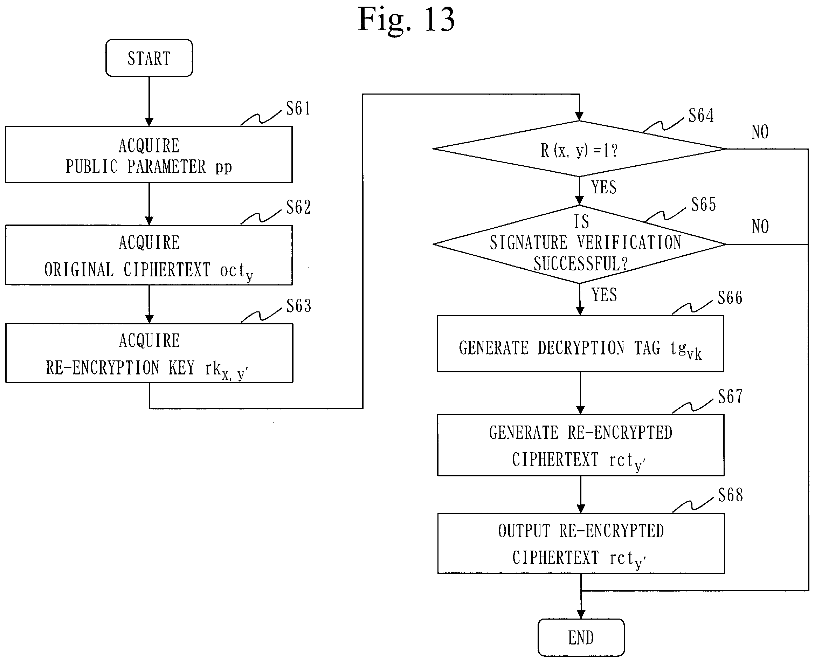

The REnc algorithm according to the first embodiment will be described with reference to Fig. 13.

The REnc algorithm is executed by the re-encryption device 50. The REnc algorithm is a probabilistic algorithm that takes as input the public parameter pp, the re-encryption key rk_{x,y'}, and the original ciphertext oct_{y}, and outputs a re-encrypted ciphertext rct_{y'}.

### (Step S61: Public parameter acquisition process)

The public parameter acquisition unit 511 acquires, via the communication interface 54, the public parameter pp that is made public by the key generation device 10.

### (Step S62: Ciphertext acquisition process)

The ciphertext acquisition unit 512 acquires, via the communication interface 54, the original ciphertext oct_{y} generated by the encryption device 20.

### (Step S63: Re-encryption key acquisition process)

The re-encryption key acquisition unit 513 acquires, via the communication interface 54, the re-encryption key rk_{x,y'} generated by the re-encryption key generation device 40.

### (Step S64: Relation verification process)

The verification unit 514 determines whether or not the key attribute x included in the re-encryption key rk_{x,y'} and the ciphertext attribute y included in the original ciphertext oct_{y} satisfy a relation R(x, y) = 1. By this, the verification unit 514 determines whether or not the original ciphertext oct_{y} can be decrypted by the decryption key dkₓ on which the re-encryption key rk_{x,y'} is based.

If R(x, y) = 1 is satisfied, the verification unit 514 advances the process to step S65. On the other hand, if R(x, y) = 1 is not satisfied, the verification unit 514 ends the process.

### (Step S65: Signature verification process)

The verification unit 514 verifies the signature σ included in the original ciphertext oct_{y} with the verification key vk included in the original ciphertext oct_{y} by a verification algorithm for one-time signatures. As the verification algorithm for one-time signatures, an existing algorithm may be employed.

If the verification is successful, the verification unit 514 advances the process to step S66. On the other hand, if the verification is not successful, the verification unit 514 ends the process.

### (Step S66: Decryption tag generation process)

The decryption tag generation unit 515 transforms the tag tg_{ϕ}^ included in the re-encryption key rk_{x,y'} to generate a decryption tag tgᵥₖ.

Specifically, the decryption tag generation unit 515 executes a TTag algorithm indicated in Formula 128, taking as input the parameter tpp, the tag tg_{ϕ}^, and the verification key vk included in the original ciphertext oct_{y}, so as to generate the decryption tag tgᵥₖ.

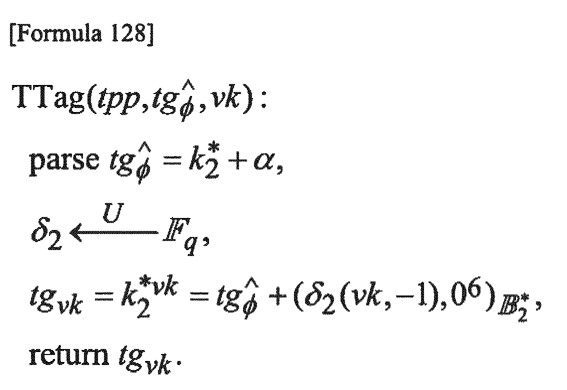

### (Step S67: Re-encryption process)

The re-encryption unit 516 encrypts the original ciphertext oct_{y}, the encryption key act_{y'} included in the re-encryption key rk_{x,y'}, and the decryption tag tgᵥₖ by an attribute-based encryption scheme using the ciphertext attribute y' included in the re-encryption key rk_{x,y'}, so as to generate a re-encrypted ciphertext rct_{y'}.

Specifically, the re-encryption unit 516 executes an AEnc algorithm indicated in Formula 129, taking as input the parameter app, the ciphertext attribute y', and data oct_{y}∥act_{y'}∥tgᵥₖ which is a concatenation of the original ciphertext oct_{y}, the encryption key act_{y'}, and the decryption tag tgᵥₖ, so as to generate the re-encrypted ciphertext rct_{y'}.

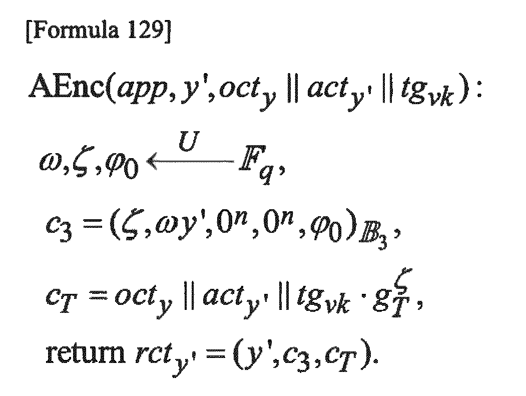

### (Step S68: Re-encrypted ciphertext output process)

The re-encrypted ciphertext output unit 517 outputs the re-encrypted ciphertext rct_{y'} generated in step S67 to the re-encrypted ciphertext decryption device 60.

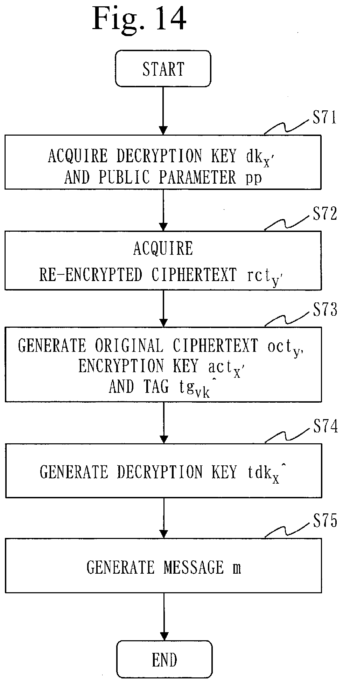

The RDec algorithm according to the first embodiment will be described with reference to Fig. 14.

The RDec algorithm is executed by the re-encrypted ciphertext decryption device 60. The RDec algorithm is an algorithm that takes as input the public parameter pp, the decryption key dk_{x'}, and the re-encrypted ciphertext rct_{y'}, and outputs the message m.

### (Step S71: Decryption key acquisition process)

The decryption key acquisition unit 611 acquires, via the communication interface 64, the decryption key dk_{x'} and the public parameter pp that are generated by the key generation device 10.

### (Step S72: Re-encrypted ciphertext acquisition process)

The re-encrypted ciphertext acquisition unit 612 acquires, via the communication interface 64, the re-encrypted ciphertext rct_{y'} generated by the re-encryption device 50.

### (Step S73: First decryption process)

The first decryption unit 613 decrypts the re-encrypted ciphertext rct_{y'} with the decryption key adk_{x'} in which the key attribute x' corresponding to the ciphertext attribute y' is set, so as to obtain the original ciphertext oct_{y}, the encryption key act_{y'}, and the decryption tag tgᵥₖ^.

Specifically, the first decryption unit 613 executes an ADec algorithm indicated in Formula 130, taking as input the parameter app, the decryption key adk_{x'} included in the decryption key dk_{x'}, and the re-encrypted ciphertext rct_{y'}, so as to generate the original ciphertext oct_{y}, the encryption key act_{y'}, and the decryption tag tgᵥₖ. [Formula 130] $\begin{matrix}ADec \left(app, {adk}_{x ′}, {rct}_{y ′}\right) : \\ parse {adk}_{x ′} = \left(x′,{k}_{3}^{∗}\right) , {rct}_{y ′} = \left(y′,{c}_{3},{c}_{T}\right) , \\ K = e \left({c}_{3}, {k}_{3}^{∗}\right) , \\ return {oct}_{y} ‖ {act}_{y ′} ‖ {tg}_{vk} = {c}_{T} / K .\end{matrix}$

### (Step S74: Second decryption process)

The second decryption unit 614 decrypts the encryption key act_{y'} with the decryption key adk_{x'}, so as to obtain the decryption key tdkₓ^ in which the random number is set.

Specifically, the second decryption unit 614 executes an ADec algorithm indicated in Formula 131, taking as input the parameter app, the decryption key adk_{x'} included in the decryption key dk_{x'}, and the encryption key act_{y'}, so as to generate the decryption key tdkₓ^. [Formula 131] $\begin{matrix}ADec \left(app, {adk}_{x ′}, {act}_{y ′}\right) : \\ parse {adk}_{x ′} = \left(x′,{k}_{3}^{∗}\right) , {act}_{y ′} = \left(y′,{c}_{3},{c}_{T}\right) , \\ K = e \left({c}_{3}, {k}_{3}^{∗}\right) , \\ return {tdk}_{x}^{∧} = {c}_{T} / K .\end{matrix}$

### (Step S75: Third decryption process)

The third decryption unit 615 decrypts the original ciphertext oct_{y} to obtain the message m.

Specifically, the third decryption unit 615 executes a TDec algorithm indicated in Formula 132, taking as input the parameter tpp, the decryption key tdkₓ^, the decryption tag tgᵥₖ, and the element tct_{y,vk} included in the original ciphertext oct_{y}, so as to generate the message m.

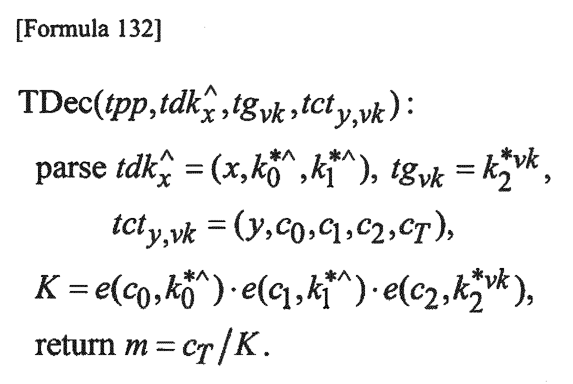

### *** Effects of First Embodiment ***

As described above, the cryptographic system 1 according to the first embodiment realizes an attribute-based proxy-re-encryption scheme, using tag-added attribute-based encryption and tagless attribute-based encryption. The cryptographic system 1 according to the first embodiment encrypts a decryption key of tag-added attribute-based encryption using attribute-based encryption, so as to generate a re-encryption key. This eliminates the need to include a random matrix in a re-encrypted ciphertext, so that an increase in the size of a ciphertext entailed in re-encryption can be reduced.

In the cryptographic system 1 according to the first embodiment, the re-encryption key generation device 40 encrypts the decryption key tdkₓ^ using the ciphertext attribute y' when generating the re-encryption key rk_{x,y'}. Therefore, the re-encryption device 50 cannot decrypt the original ciphertext oct_{y} with the re-encryption key rk_{x,y'}.

In the cryptographic system 1 according to the first embodiment, the re-encryption key generation device 40 does not encrypt the tag tg_{ϕ}^ when generating the re-encryption key rk_{x,y'}. Therefore, the re-encryption device 50 can generate the decryption tag tgᵥₖ by setting the verification key vk in the tag tg_{ϕ}^. The decryption tag tgᵥₖ in which the verification key vk is set instead of the tag tg_{ϕ}^, is included in the re-encrypted ciphertext rct_{y'}, so that the re-encrypted ciphertext decryption device 60 can decrypt only a ciphertext in which the verification key vk is set.

Note that in the first embodiment, the verification key vk is set in the original ciphertext oct_{y} and the decryption tag tgᵥₖ. However, even when different data vk, instead of the verification key vk, is set in the original ciphertext oct_{y} and the decryption tag tgᵥₖ, it is possible to obtain the effect of allowing the re-encrypted ciphertext decryption device 60 to decrypt only a ciphertext in which the data vk is set.

### *** Other Configurations ***

### <First Variation>

In the first embodiment, the functional components of the key generation device 10, the encryption device 20, the original ciphertext decryption device 30, the re-encryption key generation device 40, the re-encryption device 50, and the re-encrypted ciphertext decryption device 60 are realized by software. However, as a first variation, the functional components may be realized by hardware. Differences in this first variation from the first embodiment will be described.

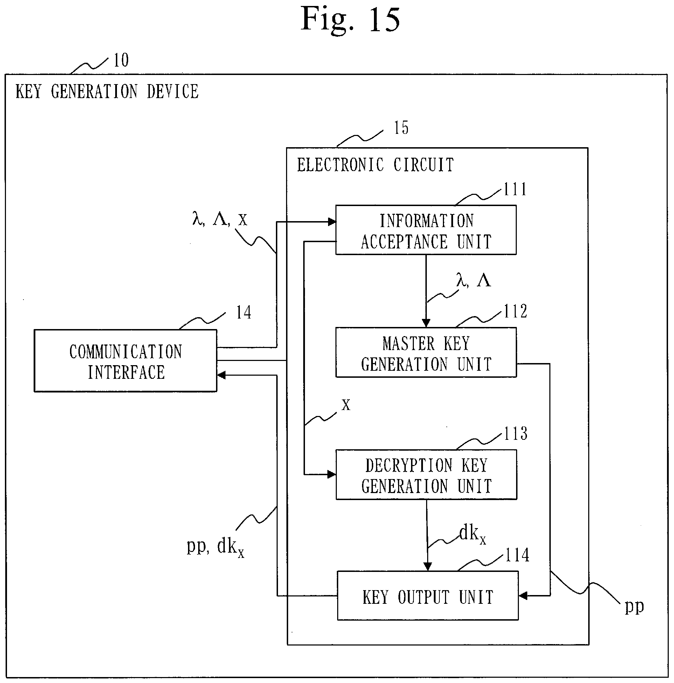

A configuration of a key generation device 10 according to the first variation will be described with reference to Fig. 15.

When the functions are realized by hardware, the key generation device 10 includes an electronic circuit 15 in place of the processor 11, the memory 12, and the storage 13. The electronic circuit 15 is a dedicated electronic circuit that realizes the functions of the memory 12, the storage 13, and the functional components of the key generation device 10.

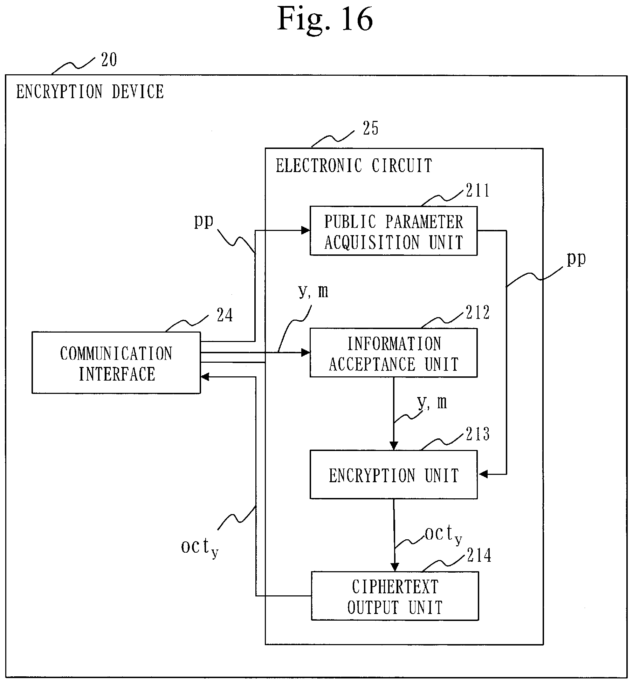

A configuration of an encryption device 20 according to the first variation will be described with reference to Fig. 16.

When the functions are realized by hardware, the encryption device 20 includes an electronic circuit 25 in place of the processor 21, the memory 22, and the storage 23. The electronic circuit 25 is a dedicated electronic circuit that realizes the functions of the memory 22, the storage 23, and the functional components of the encryption device 20.

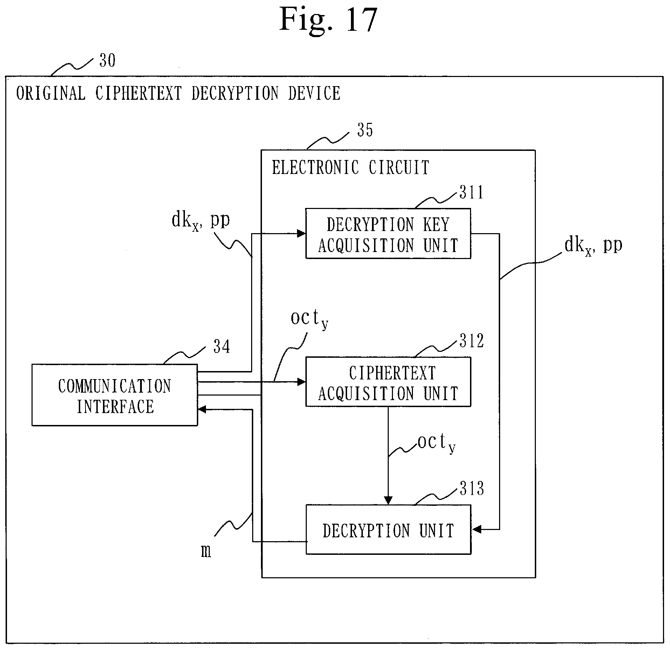

A configuration of an original ciphertext decryption device 30 according to the first variation will be described with reference to Fig. 17.

When the functions are realized by hardware, the original ciphertext decryption device 30 includes an electronic circuit 35 in place of the processor 31, the memory 32, and the storage 33. The electronic circuit 35 is a dedicated electronic circuit that realizes the functions of the memory 32, the storage 33, and the functional components of the original ciphertext decryption device 30.

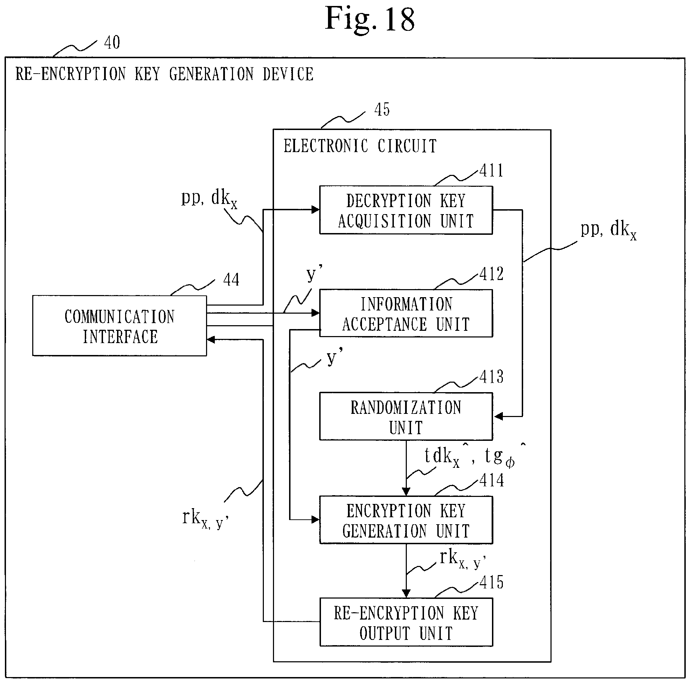

A configuration of a re-encryption key generation device 40 according to the first variation will be described with reference to Fig. 18.

When the functions are realized by hardware, the re-encryption key generation device 40 includes an electronic circuit 45 in place of the processor 41, the memory 42, and the storage 43. The electronic circuit 45 is a dedicated electronic circuit that realizes the functions of the memory 42, and the storage 43, and the functional components of the re-encryption key generation device 40.

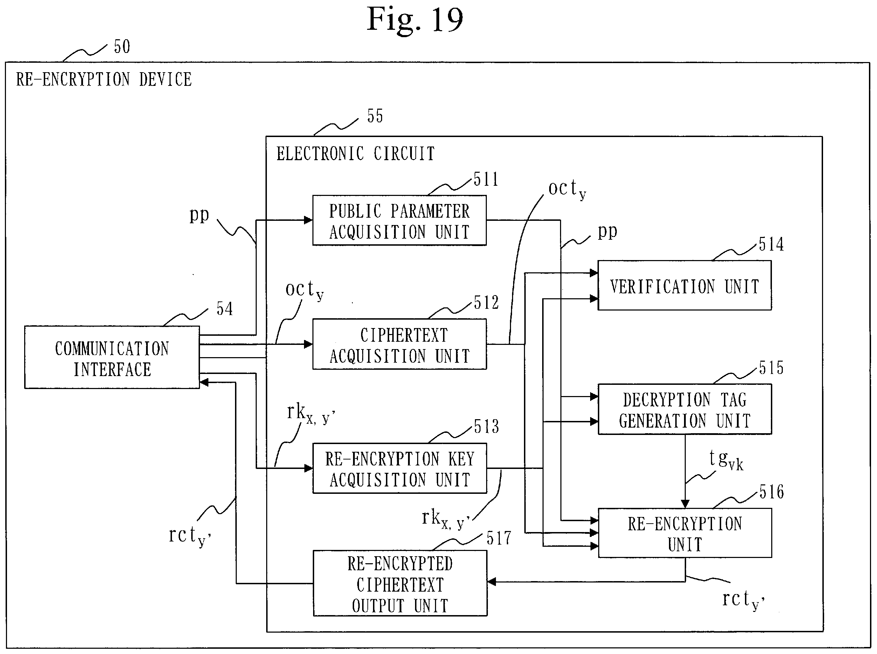

A configuration of a re-encryption device 50 according to the first variation will be described with reference to Fig. 19.

When the functions are realized by hardware, the re-encryption device 50 includes an electronic circuit 55 in place of the processor 51, the memory 52, and the storage 53. The electronic circuit 55 is a dedicated electronic circuit that realizes the functions of the memory 52, the storage 53, and the functional components of the re-encryption device 50.

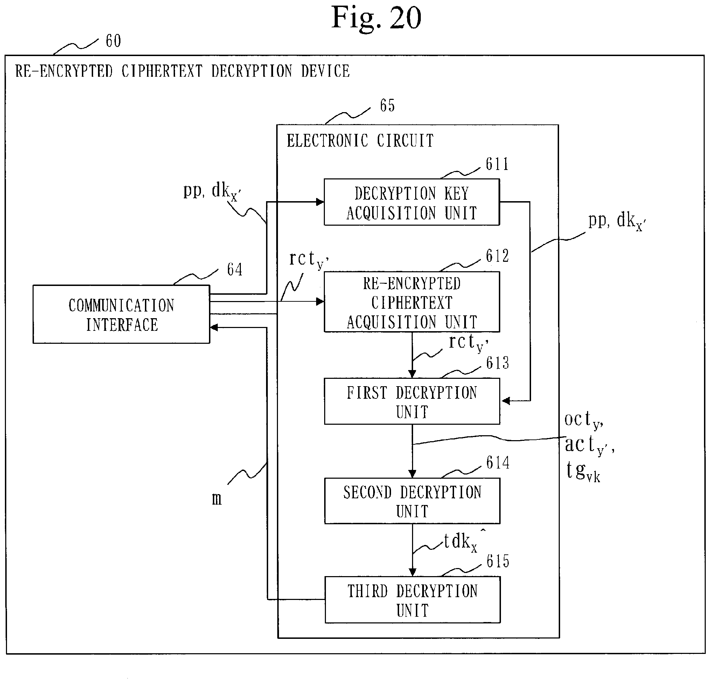

A configuration of a re-encrypted ciphertext decryption device 60 according to the first variation will be described with reference to Fig. 20.

When the functions are realized by hardware, the re-encrypted ciphertext decryption device 60 includes an electronic circuit 65 in place of the processor 61, the memory 62, and the storage 63. The electronic circuit 65 is a dedicated electronic circuit that realizes the functions of the memory 62, the storage 63, and the functional components of the re-encrypted ciphertext decryption device 60.

Each of the electronic circuits 15, 25, 35, 45, 55, and 65 is assumed to be a single circuit, a composite circuit, a programmed processor, a parallel-programmed processor, a logic IC, a gate array (GA), an application specific integrated circuit (ASIC), and a field-programmable gate array (FPGA).

The functions of the functional components of the key generation device 10 may be realized by one electronic circuit 15, or the functions of the functional components may be distributed to and realized by a plurality of electronic circuits 15. Similarly, the functions of the functional complements of the encryption device 20, the original ciphertext decryption device 30, the re-encryption key generation device 40, the re-encryption device 50, and the re-encrypted ciphertext decryption device 60 may be realized by one electronic circuit 25, 35, 45, 55, and 65, respectively, or the functions of the functional components may be distributed to and realized by a plurality of electronic circuits 25, 35, 45, 55, and 65, respectively.

### <Second Variation>

As a second variation, some of the functions may be realized by hardware, and the rest of the functions may be realized by software. That is, some functions of the functional components may be realized by hardware, and the rest of the functions may be realized by software.

Each of the processors 11, 21, 31, 41, 51, and 61, the memories 12, 22, 32, 42, 52, and 62, and the electronic circuits 15, 25, 35, 45, 55, and 65 is referred to as processing circuitry. That is, the functions of the functional components are realized by the processing circuitry.

### Reference Signs List

1: cryptographic system, 10: key generation device, 11: processor, 12: memory, 13: storage, 14: communication interface, 15: electronic circuit, 111: information acceptance unit, 112: master key generation unit, 113: decryption key generation unit, 114: key output unit, 20: encryption device, 21: processor, 22: memory, 23: storage, 24: communication interface, 25: electronic circuit, 211: public parameter acquisition unit, 212: information acceptance unit, 213: encryption unit, 214: ciphertext output unit, 30: original ciphertext decryption device, 31: processor, 32: memory, 33: storage, 34: communication interface, 35: electronic circuit, 311: decryption key acquisition unit, 312: ciphertext acquisition unit, 313: decryption unit, 40: re-encryption key generation device, 41: processor, 42: memory, 43: storage, 44: communication interface, 45: electronic circuit, 411: decryption key acquisition unit, 412: information acceptance unit, 413: randomization unit, 414: encryption key generation unit, 415: re-encryption key output unit, 50: re-encryption device, 51: processor, 52: memory, 53: storage, 54: communication interface, 55: electronic circuit, 511: public parameter acquisition unit, 512: ciphertext acquisition unit, 513: re-encryption key acquisition unit, 514: verification unit, 515: decryption tag generation unit, 516: re-encryption unit, 517: re-encrypted ciphertext output unit, 60: re-encrypted ciphertext decryption device, 61: processor, 62: memory, 63: storage, 64: communication interface, 65: electronic circuit, 611: decryption key acquisition unit, 612: re-encrypted ciphertext acquisition unit, 613: first decryption unit, 614: second decryption unit, 615: third decryption unit

## Claims

1. A re-encryption key generation device (40) comprising:
a randomization unit (413) adapted to set a random number in a decryption key tdkₓ in which a key attribute x is set and set a random number in a tag tg_{ϕ} used to decrypt a ciphertext with the decryption key tdkₓ, so as to generate a decryption key tdkₓ^ and a tag tg_{ϕ}^;
an encryption key generation unit (414) adapted to encrypt the decryption key tdkₓ^ generated by the randomization unit (413) by an attribute-based encryption scheme using a ciphertext attribute y', so as to generate an encryption key act_{y'}; and
a re-encryption key output unit (415) adapted to output a re-encryption key rk_{x,y'} including the encryption key act_{y'} generated by the encryption key generation unit (414) and the tag tg_{ϕ}^ generated by the randomization unit (413).

2. The re-encryption key generation device (40) according to claim 1,
wherein the re-encryption key rk_{x,y'} is a key for generating, from an original ciphertext oct_{y} in which a ciphertext attribute y corresponding to the key attribute x is set, a re-encrypted ciphertext rct_{y'} that can be decrypted with a decryption key adkₓ in which a key attribute x' corresponding to the ciphertext attribute y' is set.

3. The re-encryption key generation device (40) according to claim 1 or 2,
wherein the randomization unit (413) is adapted to generate the decryption key tdkₓ^ and the tag tg_{ϕ}^, as indicated in Formula 1, and
wherein the encryption key generation unit (414) is adapted to generate the encryption key act_{y'}, as indicated in Formula 2

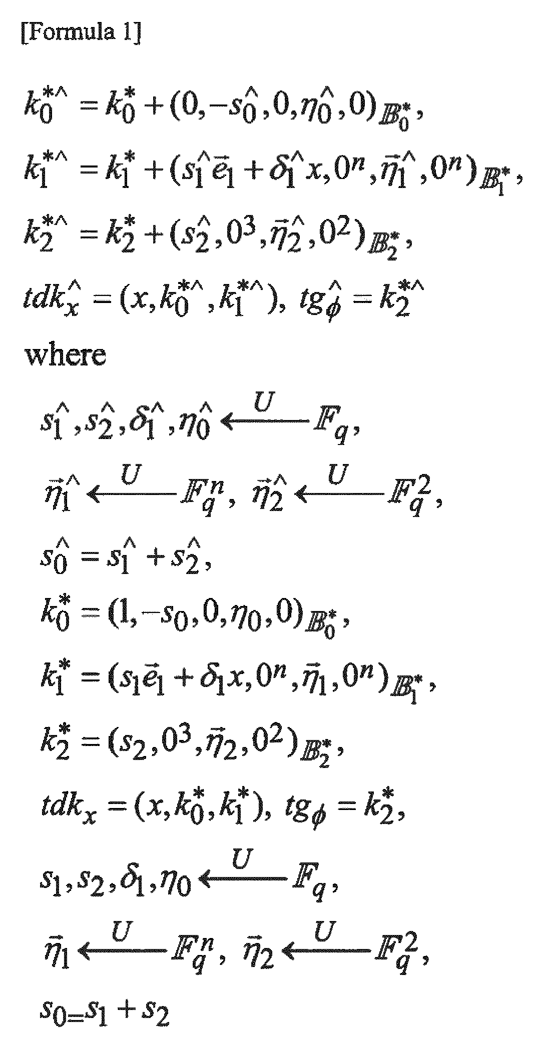

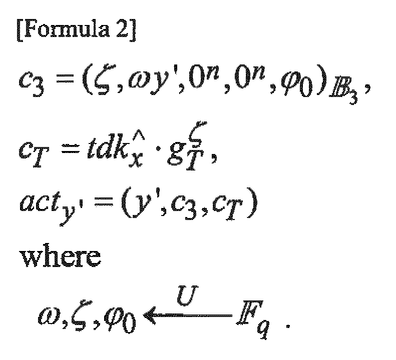

4. A re-encryption device (50) comprising:
a ciphertext acquisition unit (512) adapted to acquire an original ciphertext oct_{y} in which a ciphertext attribute y is set;
a re-encryption key acquisition unit (513) adapted to acquire a re-encryption key rk_{x,y'} including an encryption key act_{y'} and a tag tg_{ϕ}^, the encryption key act_{y'} being generated by setting a random number in a decryption key tdkₓ in which a key attribute x corresponding to the ciphertext attribute y is set and then encrypting the decryption key tdkₓ by an attribute-based encryption scheme using a ciphertext attribute y', the tag tg_{ϕ} being obtained by setting a random number in a tag tg_{ϕ} used to decrypt a ciphertext with the decryption key tdkₓ;
a decryption tag generation unit (515) adapted to transform the tag tg_{ϕ}^ included in the re-encryption key rk_{x,y'} acquired by the re-encryption key acquisition unit (513), so as to generate a decryption tag tgᵥₖ; and
a re-encryption unit (516) adapted to encrypt the original ciphertext oct_{y} acquired by the ciphertext acquisition unit (512), the encryption key act_{y'} included in the re-encryption key rk_{x,y'} acquired by the re-encryption key acquisition unit (513), and the decryption tag tgᵥₖ generated by the decryption tag generation unit (515) by an attribute-based encryption scheme using the ciphertext attribute y', so as to generate a re-encrypted ciphertext ret_{y'}.

5. The re-encryption device (50) according to claim 4,
wherein data vk is set in the original ciphertext oct_{y}, and
wherein the decryption tag generation unit (515) is adapted to generate the decryption tag tgᵥₖ by setting the data vk in the tag tg_{ϕ}^.

6. The re-encryption device (50) according to claim 4 or 5,
wherein the decryption tag generation unit (515) is adapted to generate the decryption tag tgᵥₖ, as indicated in Formula 3, and
wherein the re-encryption unit (516) is adapted to generate the re-encrypted ciphertext rct_{y'}, as indicated in Formula 4

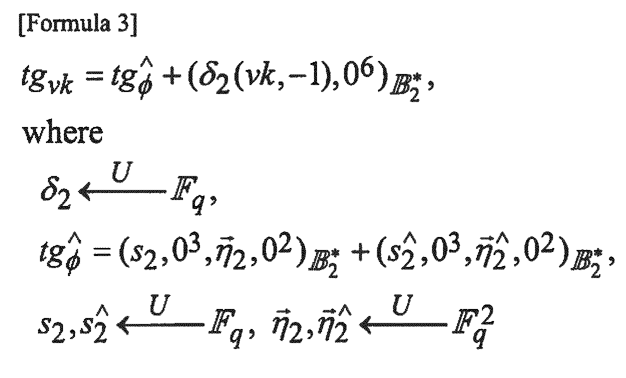

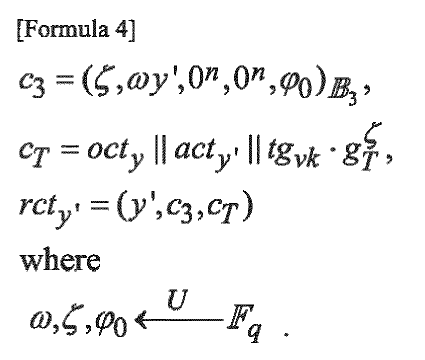

7. Are-encrypted ciphertext decryption device (60) comprising:
a re-encrypted ciphertext acquisition unit (612) adapted to acquire a re-encrypted ciphertext rct_{y'} generated by encrypting an original ciphertext oct_{y} in which a ciphertext attribute y is set, an encryption key act_{y'}, and a decryption tag tgᵥₖ by an attribute-based encryption scheme using a ciphertext attribute y', the encryption key act_{y'} being generated by setting a random number in a decryption key tdkₓ in which a key attribute x corresponding to the ciphertext attribute y is set, and then encrypting the decryption key tdkₓ by an attribute-based encryption scheme using a ciphertext attribute y', the decryption tag tgᵥₖ being generated from a tag tg_{ϕ} used to decrypt a ciphertext with the decryption key tdkₓ;
a first decryption unit (613) adapted to decrypt the re-encrypted ciphertext rct_{y'} acquired by the re-encrypted ciphertext acquisition unit (612) with a decryption key adk_{x'} in which a key attribute x' corresponding to the ciphertext attribute y' is set, so as to generate the original ciphertext oct_{y}, the encryption key act_{y'}, and the decryption tag tgᵥₖ;
a second decryption unit (614) adapted to decrypt the encryption key act_{y'} generated by the first decryption unit (613) with the decryption key adk_{x'}, so as to generate a decryption key tdkₓ^ in which a random number is set; and
a third decryption unit (615) adapted to decrypt the original ciphertext oct_{y}, using the decryption key tdkₓ^ in which the random number is set and which is generated by the second decryption unit (614) and the decryption tag tgᵥₖ.

8. The re-encrypted ciphertext decryption device (60) according to claim 7,
wherein the re-encrypted ciphertext acquisition unit (612) is adapted to acquire the re-encrypted ciphertext rct_{y'} indicated in Formula 5,
wherein the first decryption unit (613) is adapted to generate the original ciphertext oct_{y}, the encryption key act_{y'}, and the decryption tag tgᵥₖ, as indicated in Formula 6,
wherein the second decryption unit (614) is adapted to generate the decryption key tdkₓ, as indicated in Formula 7, and
wherein the third decryption unit (615) is adapted to decrypt the original ciphertext oct_{y}, as indicated in Formula 8

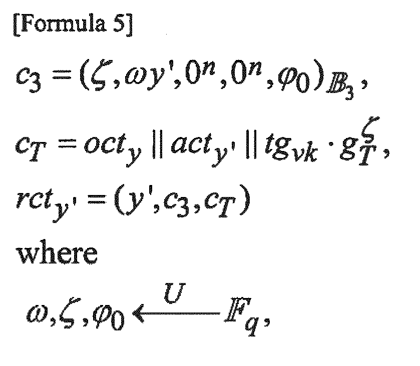

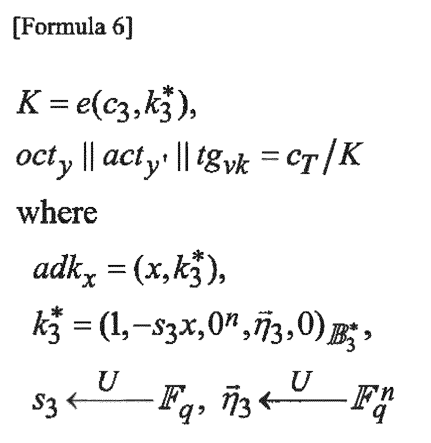

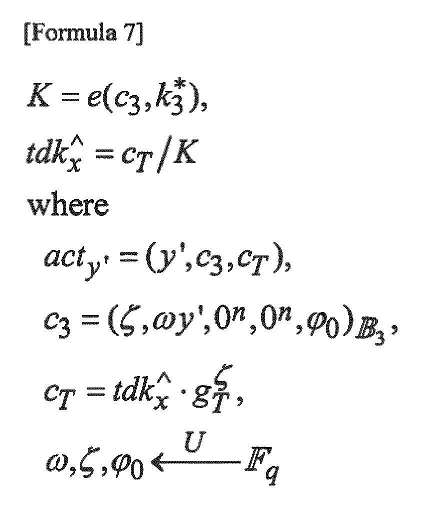

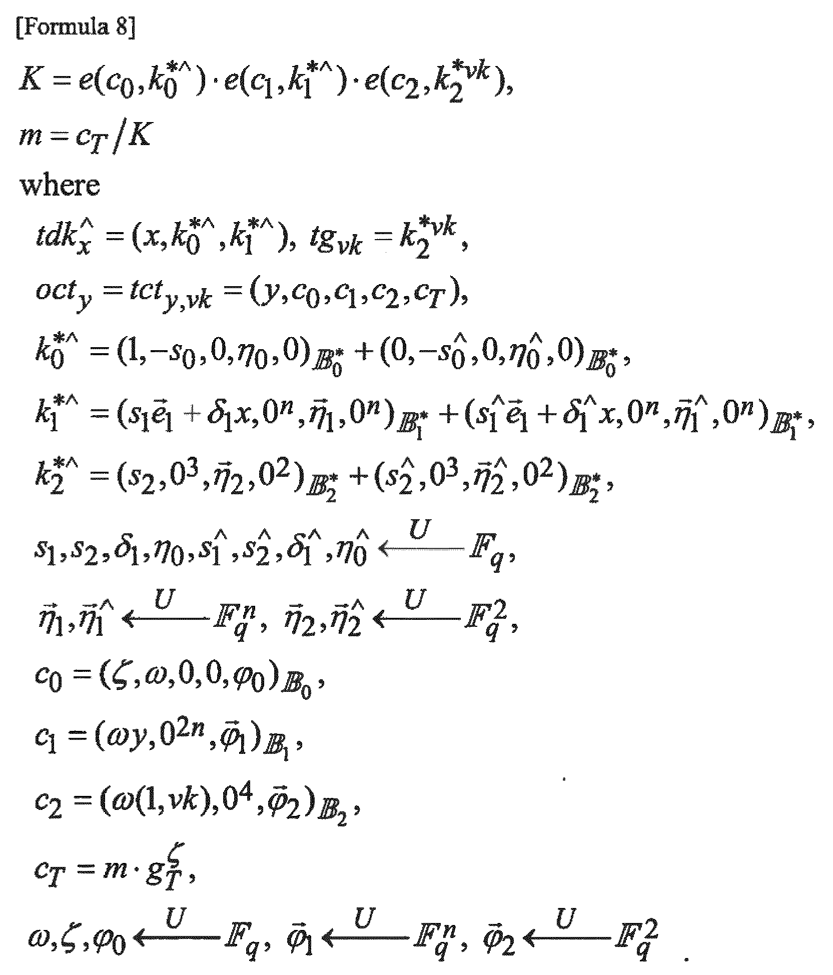

9. A cryptographic system (1) comprising:
a key generation device (10) adapted to generate a decryption key dkₓ having a tag-added decryption key and a decryption key adkₓ, the tag-added decryption key including a decryption key tdkₓ in which a key attribute x is set and a tag tg_{ϕ} used to decrypt a ciphertext with the decryption key tdkₓ, the decryption key adkₓ being a key in which the key attribute x is set; an encryption device (20) adapted to generate an original ciphertext oct_{y} in which a ciphertext attribute y corresponding to the key attribute x is set and which can be decrypted with the tag-added decryption key generated by the key generation device (10); and
a re-encryption key generation device (40) adapted to encrypt the decryption key tdkₓ generated by the key generation device (10) by an attribute-based encryption scheme using a ciphertext attribute y', so as to generate a re-encryption key rk_{x,y'} which is a key for generating a re-encrypted ciphertext rct_{y'} that can be decrypted with a decryption key adk_{x'} in which a key attribute x' corresponding to the ciphertext attribute y' is set.

## Patentansprüche

1. Neuverschlüsselungsschlüssel-Erzeugungseinrichtung (40), umfassend:
eine Randomisierungseinheit (413), die ausgelegt ist, eine Zufallszahl festzulegen in einem Entschlüsselungsschlüssel tdkₓ, in dem ein Schlüsselattribut x festgelegt ist, und eine Zufallszahl festzulegen in einem Tag tg_{ϕ}, das verwendet wird, um einen Chiffretext mit dem Entschlüsselungsschlüssel tdkₓ zu entschlüsseln, um so einen Entschlüsselungsschlüssel tdkₓ^ und ein Tag tg_{ϕ}^ zu erzeugen;
eine Verschlüsselungsschlüssel-Erzeugungseinheit (414), die ausgelegt ist, den durch die Randomisierungseinheit (413) erzeugten Entschlüsselungsschlüssel tdkₓ^ durch ein attributbasiertes Verschlüsselungsschema zu verschlüsseln unter Verwendung eines Chiffretext-Attributs y', um so einen Verschlüsselungsschlüssel act_{y} zu erzeugen; und
eine Neuverschlüsselungsschlüssel-Ausgabeeinheit (415), die ausgelegt ist, einen Neuverschlüsselungsschlüssel rk_{x,y}, umfassend den durch die Verschlüsselungsschlüssel-Erzeugungseinheit (414) erzeugten Verschlüsselungsschlüssel act_{y'} und das durch die Randomisierungseinheit (413) erzeugte Tag tg_{ϕ}^, auszugeben.

2. Neuverschlüsselungsschlüssel-Erzeugungseinrichtung (40) nach Anspruch 1,
wobei der Neuverschlüsselungsschlüssel rk_{x,y'} ein Schlüssel ist zum Erzeugen, aus einem ursprünglichen Chiffretext oct_{y}, in dem ein dem Schlüssel-Attribut x entsprechendes Chiffretext-Attribut y festgelegt ist, eines neuverschlüsselten Chiffretexts rct_{y'}, der entschlüsselt werden kann mit einem Entschlüsselungsschlüssel adk_{x'}, in dem ein dem Chiffretext-Attribut y' entsprechendes Schlüssel-Attribut x' festgelegt ist.

3. Neuverschlüsselungsschlüssel-Erzeugungseinrichtung (40) nach Anspruch 1 oder 2,
wobei die Randomisierungseinheit (413) ausgelegt ist, den Entschlüsselungsschlüssel tdkₓ^ und das Tag tg_{ϕ}^, wie in Formel 1 angegeben, zu erzeugen, und
wobei die Verschlüsselungsschlüssel-Erzeugungseinheit (414) ausgelegt ist, den Verschlüsselungsschlüssel act_{y'}, wie in Formel 2 angegeben, zu erzeugen

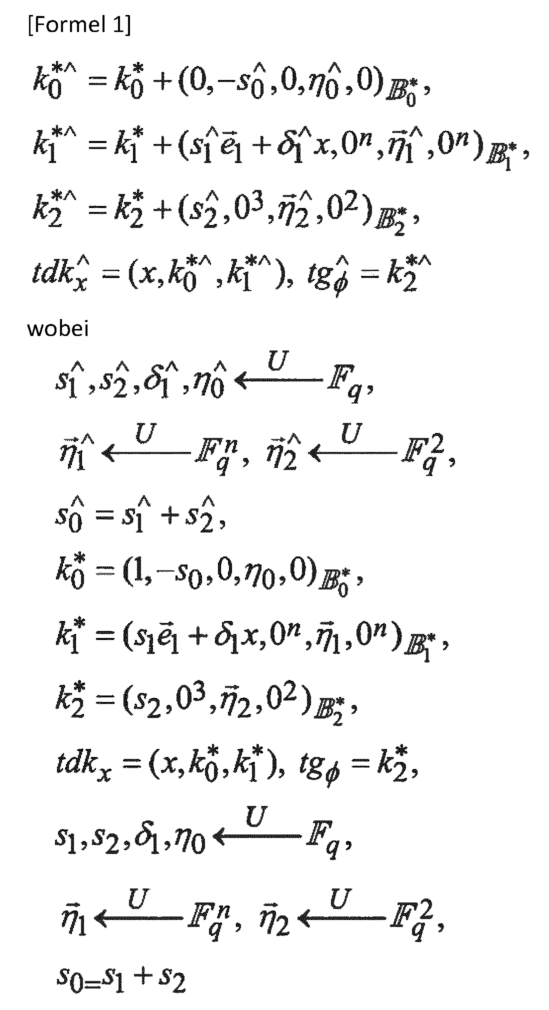

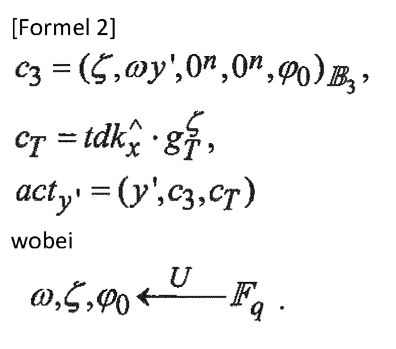

4. Neuverschlüsselungseinrichtung (50), umfassend:
eine Chiffretext-Erwerbungseinheit (512), die ausgelegt ist, einen ursprünglichen Chiffretext oct_{y}, in dem ein Chiffretext-Attribut y festgelegt ist, zu erwerben;
eine Neuverschlüsselungsschlüssel-Erwerbungseinheit (513), die ausgelegt ist, einen Neuverschlüsselungsschlüssel rk_{x,y'}, umfassend einen Verschlüsselungsschlüssel act_{y'} und ein Tag tg_{ϕ}^ zu erwerben, wobei der Verschlüsselungsschlüssel act_{y'} erzeugt wird durch Festlegen einer Zufallszahl in einem Entschlüsselungsschlüssel tdkₓ, in dem ein dem Chiffretext-Attribut y entsprechendes Schlüsselattribut x festgelegt ist, und dann Verschlüsseln des Entschlüsselungsschlüssel tdkₓ durch ein attributbasiertes Verschlüsselungsschema unter Verwendung eines Chiffretext-Attributs y', wobei das Tag tg_{ϕ} erhalten wird durch Festlegen einer Zufallszahl in einem Tag tg_{ϕ}, das verwendet wird, um einen Chiffretext mit dem Entschlüsselungsschlüssel tdkₓ zu entschlüsseln;
eine Entschlüsselungstag-Erzeugungseinheit (515), die ausgelegt ist, das Tag tg_{ϕ}^, das in dem durch die Neuverschlüsselungsschlüssel-Erwerbungseinheit (513) erworbenen Neuverschlüsselungsschlüssel rk_{x,y'} enthalten ist, zu transformieren, um so ein Entschlüsselungstag tgᵥₖ zu erzeugen; und
eine Neuverschlüsselungseinheit (516), die ausgelegt ist, den durch die Chiffretext-Erwerbungseinheit (512) erworbenen ursprünglichen Chiffretext oct_{y}, den in dem durch die Neuverschlüsselungsschlüssel-Erwerbungseinheit (513) erworben Neuverschlüsselungsschlüssel rk_{x,y'} enthaltenen Verschlüsselungsschlüssel act_{y'}, und das Entschlüsselungstag tgᵥₖ, das durch die Entschlüsselungstag-Erzeugungseinheit (515) durch ein attributbasiertes Verschlüsselungsschema unter Verwendung des Chiffretext-Attributs y' erzeugt wurde, zu verschlüsseln, um so einen neuverschlüsselten Chiffretext rct_{y'} zu erzeugen.

5. Neuverschlüsselungseinrichtung (50) nach Anspruch 4,
wobei Daten vk in dem ursprünglichen Chiffretext oct_{y} festgelegt sind, und
wobei die Entschlüsselungstag-Erzeugungseinheit (515) ausgelegt ist, das Entschlüsselungstag tgᵥₖ durch Festlegen der Daten vk in dem Tag tg_{ϕ}^ zu erzeugen.

6. Neuverschlüsselungseinrichtung (50) nach Anspruch 4 oder 5,
wobei die Entschlüsselungstag-Erzeugungseinheit (515) ausgelegt ist, den Verschlüsselungstag tgᵥₖ, wie in Formel 3 angegeben, zu erzeugen, und
wobei die Neuverschlüsselungseinheit (516) ausgelegt ist, den neuverschlüsselten Chiffretext rct_{y'}, wie in Formel 4 angegeben, zu erzeugen

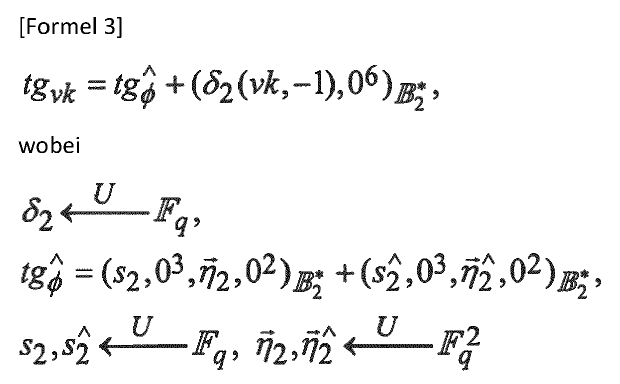

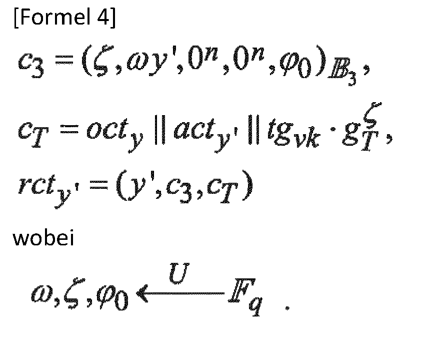

7. Neuverschlüsselter-Chiffretext-Entschlüsselungseinrichtung (60), umfassend:
eine Neuverschlüsselter-Chiffretext-Erwerbungseinheit (612), die ausgelegt ist, einen neuverschlüsselten Chiffretext rct_{y'}, der erzeugt wird durch Verschlüsseln eines ursprünglichen Chiffretexts oct_{y}, in dem ein Chiffretext-Attribut y festgelegt ist, eines Verschlüsselungsschlüssels act_{y'} und eines Entschlüsselungstag tgᵥₖ durch ein attributbasiertes Verschlüsselungsschema unter Verwendung eines Chiffretext-Attributs y' zu erwerben, wobei der Verschlüsselungsschlüssel act_{y'} erzeugt wird durch Festlegen einer Zufallszahl in einem Entschlüsselungsschlüssel tdkₓ, in dem ein dem Chiffretext-Attribut y entsprechendes Schlüssel-Attribut x festgelegt ist, und dann Verschlüsseln des Entschlüsselungsschlüssel tdkₓ durch ein attributbasiertes Verschlüsselungsschema unter Verwendung eines Chiffretext-Attributs y', wobei das Entschlüsselungstag tgᵥₖ aus einem Tag tg_{ϕ} erzeugt wird, das verwendet wird, um einen Chiffretext mit dem Entschlüsselungsschlüssel tdkₓ zu entschlüsseln;
eine erste Entschlüsselungseinheit (613), die ausgelegt ist, den durch die Neuverschlüsselter-Chiffretext-Erwerbungseinheit (612) erworbenen neuverschlüsselten Chiffretext rct_{y'} zu entschlüsseln mit einen Entschlüsselungsschlüssel adk_{x'}, in dem ein dem Chiffretext-Attribut y' entsprechendes Schlüsselattribut x' festgelegt ist, um so den ursprünglichen Chiffretext oct_{y}, den Verschlüsselungsschlüssel act_{y'} und das Entschlüsselungstag tgᵥₖ zu erzeugen;
eine zweite Entschlüsselungseinheit (614), die ausgelegt ist, den durch die erste Entschlüsselungseinheit (613) erzeugten Verschlüsselungsschlüssel act_{y'} mit dem Entschlüsselungsschlüssel adk_{x'} zu entschlüsseln, um so einen Entschlüsselungsschlüssel tdkₓ^ zu erzeugen, in dem eine Zufallszahl festgelegt ist; und
eine dritte Entschlüsselungseinheit (615), die ausgelegt ist, den ursprünglichen Chiffretext oct_{y} zu entschlüsseln unter Verwendung des Entschlüsselungsschlüssels tdkₓ^, in dem die Zufallszahl festgelegt ist und der durch die zweite Entschlüsselungseinheit (614) und das Entschlüsselungstag tgᵥₖ erzeugt ist.

8. Neuverschlüsselter-Chiffretext-Entschlüsselungseinrichtung (60) nach Anspruch 7,
wobei die Neuverschlüsselter-Chiffretext-Erwerbungseinheit (612) ausgelegt ist, den neuverschlüsselten Chiffretext rct_{y'}, wie in Formel 5 angegeben, zu erwerben,
wobei die erste Entschlüsselungseinheit (613) ausgelegt ist, den ursprünglichen Chiffretext oct_{y'}, den Verschlüsselungsschlüssel act_{y'} und den Entschlüsselungsschlüssel tgᵥₖ, wie in Formel 6 angegeben, zu erzeugen,
wobei die Randomisierungseinheit (614) ausgelegt ist, den Entschlüsselungsschlüssel tdkₓ, wie in Formel 7 angegeben, zu erzeugen, und
wobei die dritte Entschlüsselungseinheit (615) ausgelegt ist, den ursprünglichen Chiffretext oct_{y}, wie in Formel 8 angegeben, zu entschlüsseln

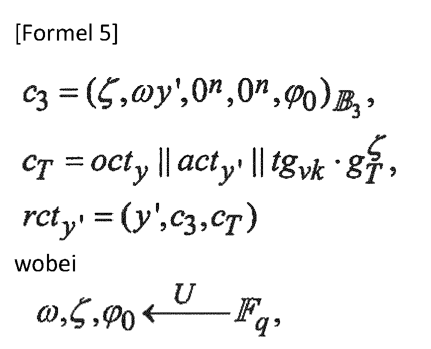

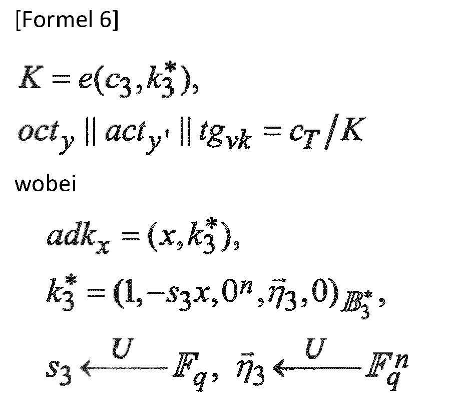

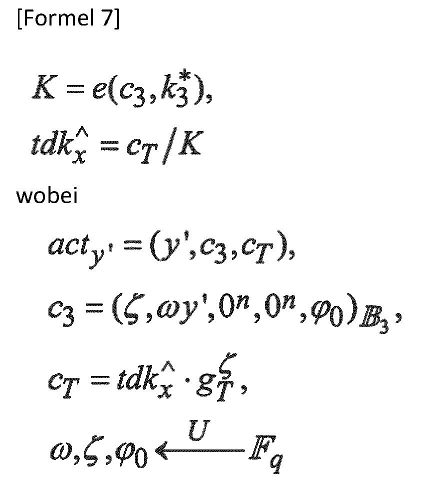

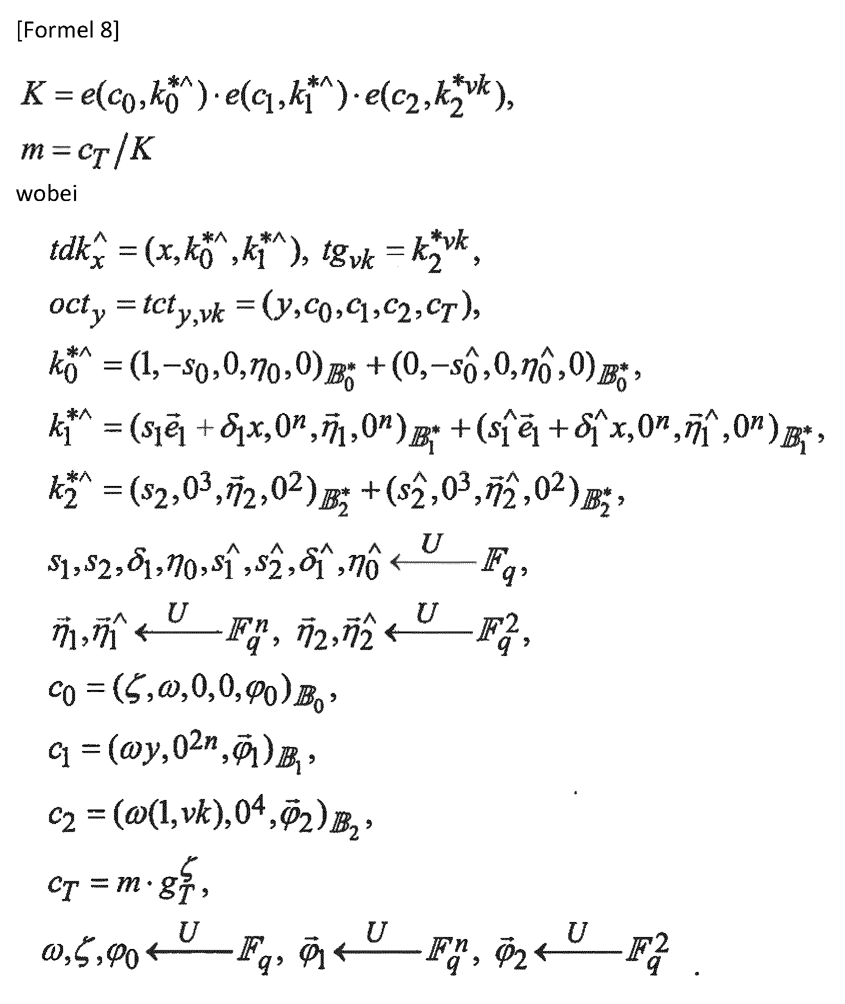

9. Kryptosystem (1), umfassend:
eine Schlüsselerzeugungseinrichtung (10), die ausgelegt ist, einen Entschlüsselungsschlüssel dkₓ, aufweisend einen mit einem Tag versehenen Entschlüsselungsschlüssel, und einen Entschlüsselungsschlüssel adkₓ zu erzeugen, wobei der mit einem Tag versehene Entschlüsselungsschlüssel einen Entschlüsselungsschlüssel tdkₓ, in dem ein Schlüssel-Attribut x festgelegt ist, und ein Tag tg_{ϕ}, das verwendet wird, um einen Chiffretext mit dem Entschlüsselungsschlüssel tdkₓ zu entschlüsseln, umfasst, wobei der Entschlüsselungsschlüssel adkₓ ein Schlüssel ist, in dem das Schlüssel-Attribut x festgelegt ist;
eine Verschlüsselungseinrichtung (20), die ausgelegt ist, einen ursprünglichen Chiffretext oct_{y}, in dem ein dem Schlüssel-Attribut x entsprechendes Chiffretext-Attribut y festgelegt ist und der mit dem durch die Schlüsselerzeugungseinrichtung (10) erzeugten mit dem Tag versehenen Entschlüsselungsschlüssel entschlüsselt werden kann, zu erzeugen; und
eine Neuverschlüsselungsschlüssel-Erzeugungseinrichtung (40), die ausgelegt ist, den durch die Schlüsselerzeugungseinrichtung (10) erzeugten Entschlüsselungsschlüssel tdkₓ durch ein attributbasiertes Verschlüsselungsschema unter Verwendung eines Chiffretext-Attributs y' zu verschlüsseln, um so einen Neuverschlüsselungsschlüssel rk_{x,y'}, der ein Schlüssel zum Erzeugen eines neuverschlüsselten Chiffretexts rct_{y'}, der mit einem Entschlüsselungsschlüssel adk_{x'}, in dem ein dem Chiffretext-Attribut y' entsprechendes Schlüssel-Attribut x' festgelegt ist, entschlüsselt werden kann, ist, zu erzeugen.

## Revendications

1. Dispositif de génération d'une clé de rechiffrement (40) comprenant :
une unité de randomisation (413) destinée à régler un nombre aléatoire dans une clé de déchiffrement tdkₓ dans laquelle est réglé un attribut de clé x, et à régler un nombre aléatoire dans une étiquette tg_{ϕ} utilisée pour déchiffrer un texte chiffré avec la clé de déchiffrement tdkₓ, afin de générer une clé de déchiffrement tdkₓ^ et une étiquette tg_{ϕ}^ ;
une unité de génération de clé de chiffrement (414) destinée à chiffrer la clé de déchiffrement tdkₓ^ générée par l'unité de randomisation (413), par un système de chiffrement basé sur un attribut en utilisant un attribut de texte chiffré y', afin de générer une clé de chiffrement act_{y'} ; et
une unité de sortie de clé de rechiffrement (415) destinée à délivrer en sortie une clé de rechiffrement rk_{x,y'} comprenant la clé de chiffrement act_{y'} générée par l'unité de génération de clé de chiffrement (414), et l'étiquette tg_{ϕ}^ générée par l'unité de randomisation (413).

2. Dispositif de génération d'une clé de rechiffrement (40) selon la revendication 1,
où la clé de rechiffrement rk_{x,y'} est une clé destinée à générer, à partir d'un texte chiffré original oct_{y} dans lequel est réglé un attribut de texte chiffré y correspondant à l'attribut de clé x, un texte chiffré rechiffré rct_{y'} qui peut être déchiffré avec une clé de déchiffrement adk_{x'} dans laquelle est réglé un attribut de clé x' correspondant à l'attribut de texte chiffré y'.

3. Dispositif de génération d'une clé de rechiffrement (40) selon la revendication 1 ou 2,
où l'unité de randomisation (413) génère la clé de déchiffrement tdkₓ^ et étiquette tg_{ϕ}^, comme l'indique la formule 1, et
où l'unité de génération de clé de chiffrement (414) génère la clé de chiffrement act_{y'}, comme l'indique la formule 2

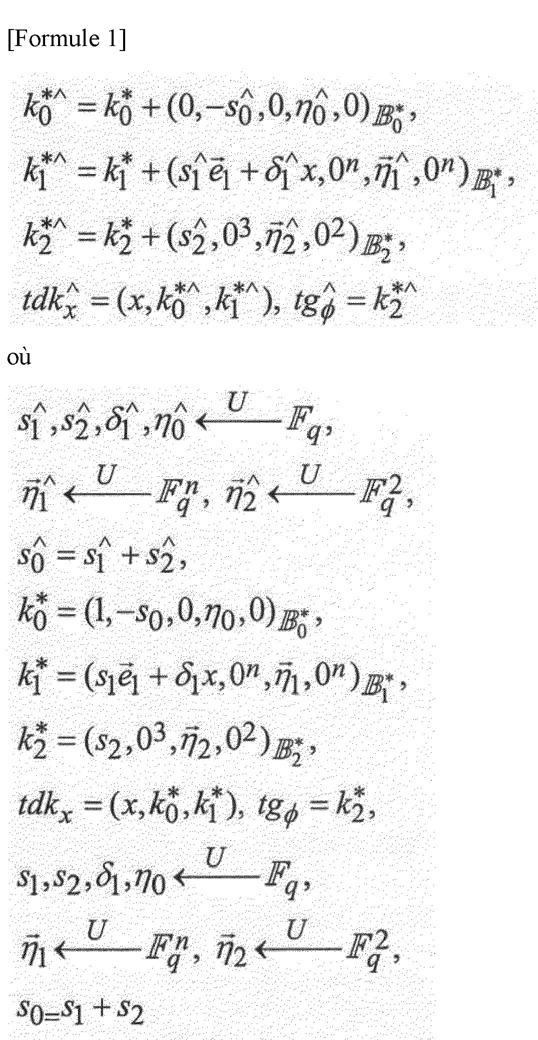

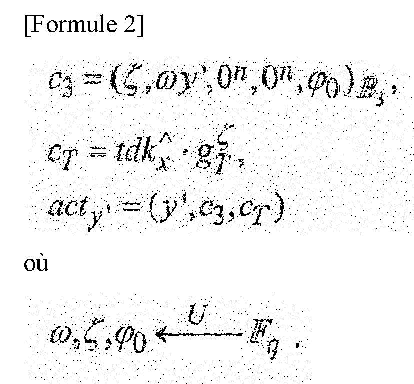

4. Dispositif de rechiffrement (50) comprenant :
une unité d'acquisition de texte chiffré (512) destinée à acquérir un texte chiffré original oct_{y} dans lequel est réglé un attribut de texte chiffré y ;
une unité d'acquisition de clé de rechiffrement (513) destinée à acquérir une clé de rechiffrement rk_{x,y'} comprenant une clé de chiffrement act_{y'} et une étiquette tg_{ϕ}^, la clé de chiffrement act_{y'} étant générée en réglant un nombre aléatoire dans une clé de déchiffrement tdkₓ dans laquelle est réglé un attribut de clé x correspondant à l'attribut de texte chiffré y, et ensuite à chiffrer la clé de déchiffrement tdkₓ par un système de chiffrement basé sur un attribut en utilisant un attribut de texte chiffré y', l'étiquette tg_{ϕ} étant obtenue en réglant un nombre aléatoire dans une balise tg_{ϕ} utilisée pour déchiffrer un texte chiffré avec la clé de déchiffrement tdkₓ ;
une unité de génération d'étiquette de déchiffrement (515) destinée à transformer l'étiquette tg_{ϕ}^ incluse dans la clé de rechiffrement rk_{x,y'} acquise par l'unité d'acquisition de clé de rechiffrement (513), afin de générer une étiquette de déchiffrement tgᵥₖ ; et
une unité de rechiffrement (516) destinée à chiffrer le texte chiffré original oct_{y} acquis par l'unité d'acquisition de texte chiffré (512), la clé de chiffrement act_{y'} incluse dans la clé de rechiffrement rk_{x,y'} acquise par l'unité d'acquisition de clé de rechiffrement (513), et l'étiquette de déchiffrement tgᵥₖ générée par l'unité de génération d'étiquette de déchiffrement (515) par un système de chiffrement basé sur un attribut en utilisant l'attribut de texte chiffré y', afin de générer un texte chiffré rechiffré rct_{y'}.

5. Dispositif de rechiffrement (50) selon la revendication 4,
où des données vk sont réglées dans le texte chiffré original oct_{y}, et
où l'unité de génération d'étiquette de déchiffrement (515) génère l'étiquette de déchiffrement tgᵥₖ en réglant les données vk dans étiquette tg_{ϕ}^.

6. Dispositif de rechiffrement (50) selon la revendication 4 ou 5,
où l'unité de génération d'étiquette de déchiffrement (515) génère la clé de déchiffrement tgᵥₖ, comme l'indique la formule 3, et
où l'unité de rechiffrement (516) génère le texte chiffré rechiffré rct_{y'}, comme l'indique la formule 4

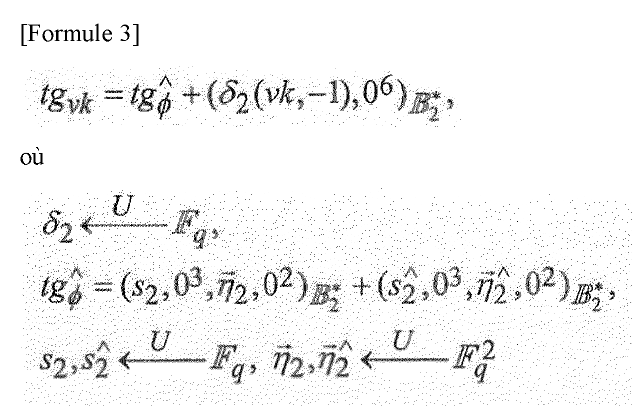

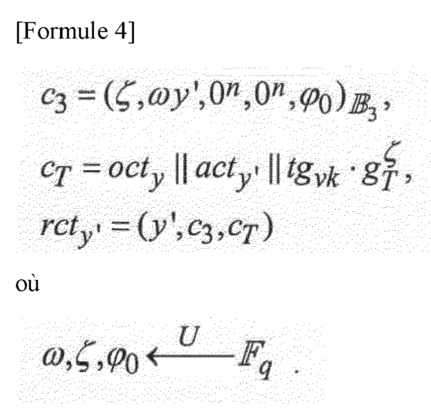

7. Dispositif de déchiffrement d'un texte chiffré rechiffré (60) comprenant :
une unité d'acquisition de texte chiffré rechiffré (612) destinée à acquérir un texte chiffré rechiffré rct_{y'} généré en chiffrant un texte chiffré original oct_{y} dans lequel est réglé un attribut de texte chiffré y, une clé de chiffrement act_{y'}, et une étiquette de déchiffrement tgᵥₖ par un système de chiffrement basé sur un attribut en utilisant un attribut de texte chiffré y', la clé de chiffrement act_{y'} étant générée en réglant un nombre aléatoire dans une clé de déchiffrement tdkₓ dans laquelle est réglé un attribut de clé x correspondant à l'attribut de texte chiffré y, et ensuite à chiffrer la clé de déchiffrement tdkₓ par un système de chiffrement basé sur un attribut en utilisant un d'attribut de texte chiffré y', l'étiquette de déchiffrement tgᵥₖ étant générée à partir d'une étiquette tg_{ϕ} utilisée pour déchiffrer un texte chiffré avec la clé de déchiffrement tdkₓ ;
une première unité de déchiffrement (613) destinée à déchiffrer le texte chiffré rechiffré rct_{y'} acquis par l'unité d'acquisition de texte chiffré rechiffré (612) avec une clé de déchiffrement adk_{x'} dans laquelle est réglé un attribut de clé x' correspondant à l'attribut de texte chiffré y', afin de générer le texte chiffré original oct_{y}, la clé de chiffrement act_{y'}, et l'étiquette de déchiffrement tgᵥₖ ;
une deuxième unité de déchiffrement (614) destinée à déchiffrer la clé de chiffrement act_{y'} générée par la première unité de déchiffrement (613) avec la clé de déchiffrement adk_{x'}, afin de générer une clé de déchiffrement tdkₓ^ dans laquelle est réglé un nombre aléatoire ; et
une troisième unité de déchiffrement (615) destinée à déchiffrer le texte chiffré original oct_{y}, en utilisant la clé de déchiffrement tdkₓ^ dans laquelle est réglé le nombre aléatoire et qui est générée par la deuxième unité de déchiffrement (614), et l'étiquette de déchiffrement tgᵥₖ.

8. Dispositif de déchiffrement d'un texte chiffré rechiffré (60) selon la revendication 7,
où l'unité d'acquisition de texte chiffré rechiffré (612) acquiert le texte chiffré rechiffré rct_{y'}, comme l'indique la formule 5,
où la première unité de déchiffrement (613) génère le texte chiffré original oct_{y}, la clé de chiffrement act_{y'}, et l'étiquette de déchiffrement tgᵥₖ, comme l'indique la formule 6,
où la deuxième unité de déchiffrement (614) génère la clé de déchiffrement tdkₓ, comme l'indique la formule 7, et
où la troisième unité de déchiffrement (615) déchiffre le texte chiffré original oct_{y}, comme l'indique la formule 8

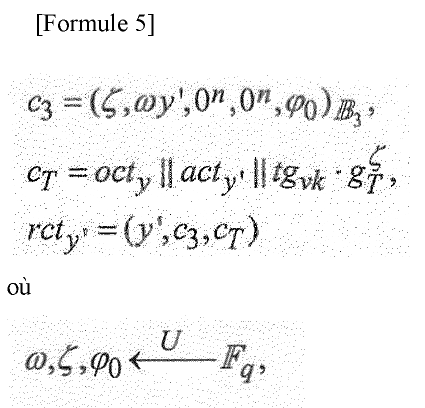

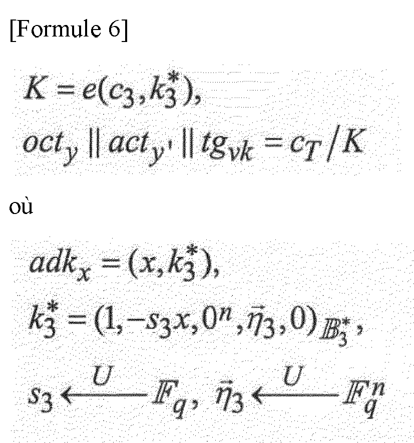

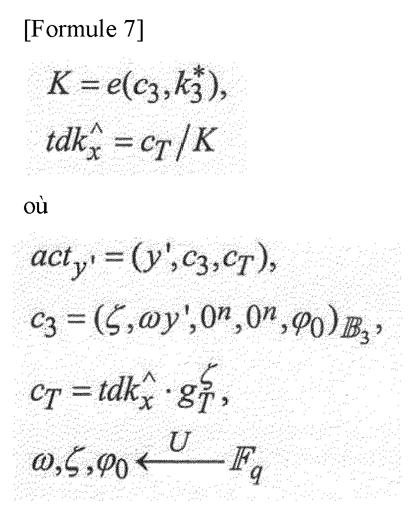

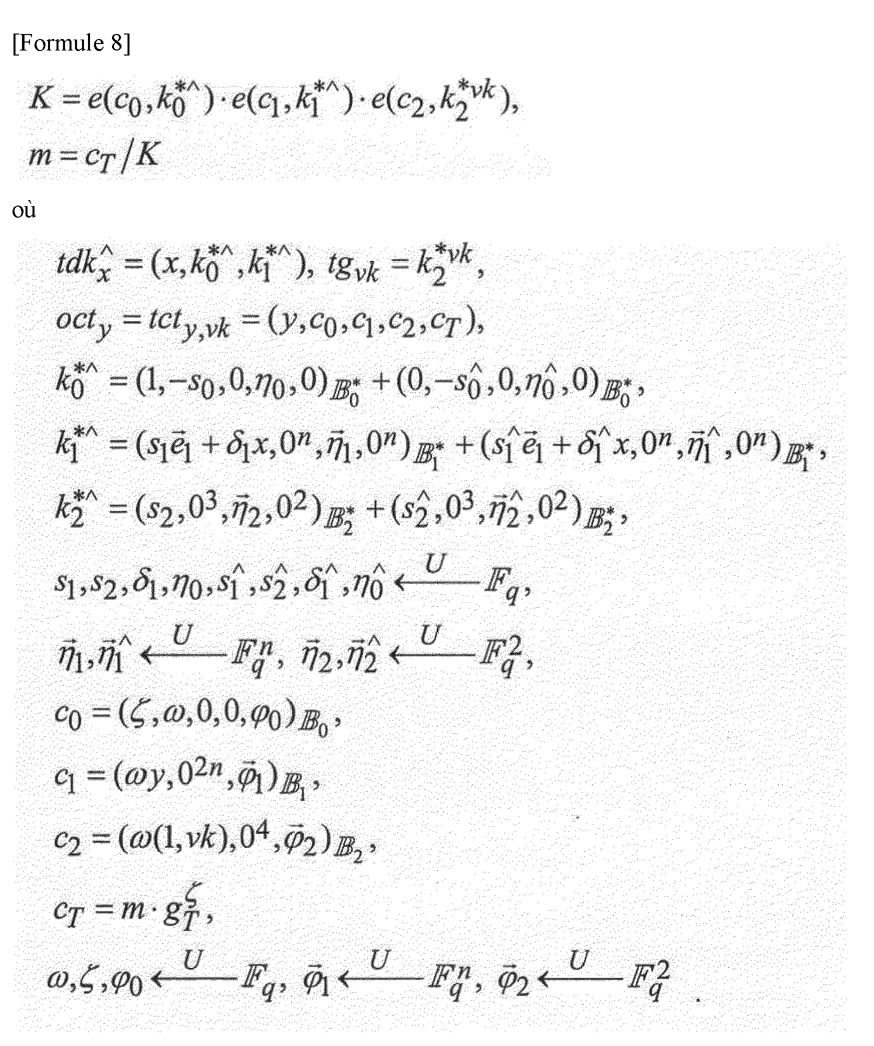

9. Système de chiffrement (1) comprenant :
un dispositif de génération de clé (10) destiné à générer une clé de déchiffrement dkₓ présentant une clé de déchiffrement à laquelle est ajoutée une étiquette, et une clé de déchiffrement adkₓ, la clé de déchiffrement à laquelle est ajoutée une étiquette comprenant une clé de déchiffrement tdkₓ dans laquelle est réglé un attribut de clé x, et une étiquette tg_{ϕ} utilisée pour déchiffrer un texte chiffré avec la clé de déchiffrement tdkₓ, la clé de déchiffrement adkₓ étant une clé dans laquelle est réglé l'attribut de clé x ;
un dispositif de chiffrement (20) destiné à générer un texte chiffré original oct_{y} dans lequel est réglé un attribut de texte chiffré y correspondant à l'attribut de clé x, et qui peut être déchiffré avec la clé de déchiffrement à laquelle est ajoutée une étiquette générée par le dispositif de génération de clé (10) ; et
un dispositif de génération de clé de rechiffrement (40) destiné à chiffrer la clé de déchiffrement tdkₓ générée par le dispositif de génération de clé (10) par un système de chiffrement basé sur un attribut en utilisant un attribut de texte chiffré y', afin de générer un clé de rechiffrement rk_{x,y'} qui est une clé destinée à générer un texte chiffré rechiffré rct_{y'} qui peut être déchiffré avec une clé de déchiffrement adk_{x'} dans laquelle est réglé un attribut de clé x correspondant à l'attribut de texte chiffré y'.
